(19) Europäisches Patentamt
European Patent Office
Office européen des brevets

(11) **EP 4 239 001 A1**

(12) **EUROPEAN PATENT APPLICATION**
published in accordance with Art. 153(4) EPC

(43) Date of publication:
**06.09.2023 Bulletin 2023/36**

(21) Application number: **21886201.9**

(22) Date of filing: **26.10.2021**

(51) International Patent Classification (IPC):
***C08F 36/04*** (2006.01) ***C08F 299/00*** (2006.01)
***C08K 5/14*** (2006.01) ***C08L 9/00*** (2006.01)
***C08L 21/00*** (2006.01) ***C08L 101/00*** (2006.01)
***C09K 3/10*** (2006.01) ***C08K 3/00*** (2018.01)
***C08K 3/011*** (2018.01) ***C08K 3/013*** (2018.01)
***C08K 3/18*** (2006.01)

(52) Cooperative Patent Classification (CPC):
**C08F 36/04; C08F 299/00; C08K 3/00; C08K 3/011; C08K 3/013; C08K 3/18; C08K 5/14; C08L 9/00; C08L 21/00; C08L 101/00; C09K 3/10**

(86) International application number:
**PCT/JP2021/039482**

(87) International publication number:
**WO 2022/092083 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2020 JP 2020180749**
**01.04.2021 JP 2021063116**

(71) Applicant: **Kuraray Co., Ltd.**
**Kurashiki-shi, Okayama 710-0801 (JP)**

(72) Inventors:
- **UENO, Yoshikazu**
  **Kamisu-shi, Ibaraki 314-0197 (JP)**
- **MARTINEZ VELENCOSO, Maria**
  **65795 Hattersheim am Main (DE)**
- **MOMOI, Nana**
  **Kamisu-shi, Ibaraki 314-0197 (JP)**
- **UEHARA, Yosuke**
  **Kamisu-shi, Ibaraki 314-0197 (JP)**

(74) Representative: **Müller-Boré & Partner**
**Patentanwälte PartG mbB**
**Friedenheimer Brücke 21**
**80639 München (DE)**

(54) **CURABLE COMPOSITION AND SEALANT**

(57) Provided are a curable composition comparable to a curing rate by conventional sulfur while maintaining performance required as a cured product even when a crosslinking agent is replaced with a peroxide, and a sealant containing a cured product of the curable composition. A curable composition containing a conjugated diene-based polymer (A) and a crosslinking agent (B), in which the conjugated diene-based polymer (A) has 100 moles or more of double bonds in a side chain per mole of the polymer.

Fig. 1

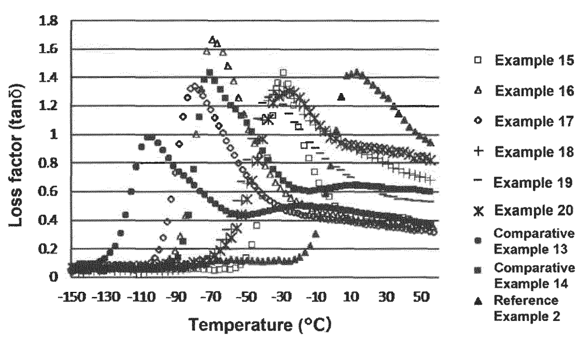


EP 4 239 001 A1

## Description

### Technical Field

The present invention relates to a curable composition containing a conjugated diene-based polymer and a crosslinking agent, and a sealant containing a cured product of the curable composition.

### Background Art

The composition containing the conjugated diene-based polymer, particularly a liquid conjugated diene-based polymer having a relatively low molecular weight, have excellent adherence, and the cured product obtained by crosslinking the composition have excellent adhesiveness to, for example, an adherend, and thus have been conventionally used as the sealant in various industrial applications, for example, automobile applications.

For example, it has been studied that a cured product of a rubber composition containing a solid rubber and a liquid diene-based rubber as rubber components, and further containing a filler and oil is used as the sealant (see, for example, Patent Literature 1).

On the other hand, a sealant, particularly a sealant used for automobile applications, is also affected by environmental regulations in Europe, and it has been studied that the crosslinking agent contained in the curable composition as a raw material of the sealant is replaced from sulfur to a peroxide. It is desired that the curable composition to be used in a sealant for automotive applications is cured under conditions compatible with an automobile manufacturing process (for example, heat treatment at about 180°C for about 20 minutes) to form the sealant.

As such a composition for the sealant, a composition containing a liquid rubber having specific properties and a peroxide has been studied (see, for example, Patent Literature 2).

### Citation List

#### Patent Literature

Patent Literature 1: JP 2015-105278 A
Patent Literature 2: WO 20019/190620 A

### Summary of Invention

#### Technical Problem

However, it has been revealed that when the crosslinking agent is changed from sulfur to a peroxide, in a curable composition containing a conventional conjugated diene-based polymer, the crosslinking of the conjugated diene-based polymer by heat may not sufficiently proceed under desired conditions, for example, conditions available in the automobile manufacturing process.

Therefore, even in the curable composition containing the conjugated diene-based polymer or when the crosslinking agent is replaced with the peroxide, a curable composition comparable to a curing rate by conventional sulfur while maintaining performance required as the cured product (for example, the sealant) is desired.

The present invention has been made in view of the above circumstances, and provides the curable composition comparable to the curing rate by conventional sulfur while maintaining the performance required as the cured product even when the crosslinking agent is replaced with the peroxide, and a sealant containing a cured product of the curable composition.

#### Solution to Problem

As a result of intensive studies, the present inventors have found that when the curable composition contains the conjugated diene-based polymer and the crosslinking agent that satisfy specific conditions, even when the crosslinking agent is replaced with the peroxide, it is possible to obtain the curable composition comparable to the curing rate by conventional sulfur while maintaining the performance required as the cured product, and completed the present invention.

That is, the present invention relates to the following [1] to [11].

[1] A curable composition containing a conjugated diene-based polymer (A) and a crosslinking agent (B), in which the conjugated diene-based polymer (A) has 100 moles or more of double bonds in a side chain per mole of the polymer.
[2] The curable composition according to [1], in which the conjugated diene-based polymer (A) is a polymer containing at least one monomer unit selected from the group consisting of a β-farnesene unit and a butadiene unit.
[3] The curable composition according to [1] or [2], in which the conjugated diene-based polymer (A) has a number average molecular weight of 9,000 to 500,000.
[4] The curable composition according to any one of [1] to [3], in which the conjugated diene-based polymer (A) has a melt viscosity at 38°C of 0.1 to 3,000 Pa-s.
[5] The curable composition according to any one of [1] to [4], in which the crosslinking agent (B) is a peroxide.
[6] The curable composition according to any one of [1] to [5], further containing a filler (C).
[7] The curable composition according to any one of [1] to [6], further containing a foaming agent (G).
[8] The curable composition according to any one of [1] to [7], further containing a solid rubber (D).
[9] The curable composition according to any one of [1] to [8], further containing a crosslinking aid (E), in which the crosslinking aid (E) contains a (meth)acryloyl group-modified conjugated diene-based polymer.
[10] The curable composition according to any one of [1] to [9], further containing another polymer (F).
[11] A sealant containing a cured product of the curable composition according to any one of [1] to [10].

Advantageous Effects of Invention

According to the present invention, even when the crosslinking agent is replaced with the peroxide, it is possible to obtain the curable composition comparable to the curing rate by conventional sulfur while maintaining the performance required as the cured product. In addition, the cured product of the curable composition of the present invention is useful as the sealant.

Brief Description of Drawings

Fig. 1 is a graph obtained by measuring temperature dependency of tan δ obtained by viscoelasticity measurement in a tensile mode of cured products obtained in Examples and Comparative Examples.
Fig. 2 is a graph obtained by measuring temperature dependency of storage elastic modulus obtained by viscoelasticity measurement in a tensile mode of cured products obtained in Examples and Comparative Examples.

Description of Embodiments

[Curable composition]

A curable composition of the present invention contains a conjugated diene-based polymer (A) as a rubber component, and further contains a crosslinking agent (B).

[Conjugated diene-based polymer (A)]

The conjugated diene-based polymer (A) used in the present invention is a polymer containing a conjugated diene unit, and has 100 moles or more of double bonds in a side chain per mole of the polymer.
The curable composition containing such a conjugated diene-based polymer (A) provides a curable composition comparable to a curing rate by conventional sulfur while maintaining performance required as a cured product.
The conjugated diene-based polymer (A) contains the conjugated diene unit as a monomer unit constituting the polymer. Examples of the conjugated diene include butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, α-farnesene, β-farnesene, and chloroprene. From the viewpoint of improving the curing rate, the conjugated diene unit contained in the conjugated diene-based polymer (A) preferably contains a β-farnesene unit and a butadiene unit. These conjugated dienes may be used alone or in combination of two or more thereof.
In a preferred aspect, the conjugated diene-based polymer (A) contains at least one monomer unit selected from the group consisting of the β-farnesene unit and the butadiene unit in an amount of 50 mass% or more of all monomer units constituting the polymer. The total content of the butadiene unit and the β-farnesene unit is preferably 60 to 100 mass%, more preferably 70 to 100 mass%, still more preferably 80 to 100 mass%, particularly preferably 90 to 100 mass%, and may be substantially 100 mass% with respect to the total monomer units of the conjugated diene-based polymer (A) .

Examples of the monomer unit other than the butadiene unit and the β-farnesene unit that can be contained in the conjugated diene-based polymer (A) include a conjugated diene (hereinafter also referred to as a conjugated diene (a1)) unit other than the butadiene unit and the β-farnesene unit described above and an aromatic vinyl compound (a2) unit.

Examples of the aromatic vinyl compound (a2) include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl) styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. Among these aromatic vinyl compounds (a2), styrene, α-methylstyrene, and 4-methylstyrene are preferred. These conjugated dienes may be used alone or in combination of two or more thereof.

The content of the monomer unit other than the butadiene unit and the β-farnesene unit in the conjugated diene-based polymer (A) is preferably 50 mass% or less, more preferably 45 mass% or less, still more preferably 40 mass% or less, even more preferably 35 mass% or less, and particularly preferably 30 mass% or less. For example, when the aromatic vinyl compound (a2) unit is within the above range, processability of the curable composition tends to be improved.

The conjugated diene-based polymer (A) has 100 moles or more of double bonds in a side chain per mole of the polymer. When the number of moles of the double bond in the side chain per mole of the polymer is 100 moles or more, even when the crosslinking agent is replaced with a peroxide, it is possible to obtain the curable composition comparable to the curing rate by conventional sulfur while maintaining the performance required as the cured product.

The double bond in the side chain means a carbon-carbon double bond contained in the polymer other than a carbon-carbon double bond contained in a main chain of the conjugated diene-based polymer (A). The number of moles of the double bond in the side chain per mole of the polymer can be calculated from the vinyl content (mol%) and a degree of polymerization. Further, the vinyl content can be calculated from a measurement result of $^1$H-NMR described later. Furthermore, the degree of polymerization can be calculated by dividing a number average molecular weight (Mn) determined in terms of standard polystyrene by gel permeation chromatography (GPC) by a molecular weight of a monomer to be each monomer unit.

For example, the degree of polymerization of β-farnesene homopolymer can be calculated by dividing a number average molecular weight Mn(βf) of the β-farnesene homopolymer by the molecular weight (204) of the β-farnesene (Mn(βf)/204). The β-farnesene has three carbon-carbon double bonds. The farnesene unit bonded at a 1,13-bond that can be contained in the farnesene homopolymer has two carbon-carbon double bonds per farnesene unit in the side chain. On the other hand, the farnesene unit bonded by a vinyl bond (3,13-bond and 1,2-bond) that can be contained in the farnesene homopolymer has three carbon-carbon double bonds per farnesene unit in the side chain. Therefore, in the case of the farnesene homopolymer, the number of moles of the double bond included in the side chain is determined by (degree of polymerization)×(vinyl content)/100×3 + (degree of polymerization)×(100 - vinyl content)/100×2.

Further, the number of moles of the double bond included in the side chain per mole of a butadiene homopolymer can be calculated as follows. The degree of polymerization of the butadiene homopolymer can be calculated by dividing a number average molecular weight Mn(Bd) of the butadiene homopolymer by the molecular weight (54) of the butadiene (Mn(Bd)/54). The butadiene has two carbon-carbon double bonds in one molecule thereof. The butadiene unit bonded by a 1,4-bond that can be contained in the butadiene homopolymer does not have a carbon-carbon double bond in the side chain. On the other hand, the butadiene unit bonded by a 1,2-bond that can be contained in the butadiene homopolymer has one carbon-carbon double bond per butadiene unit in the side chain. Therefore, in the case of the butadiene homopolymer, the number of moles of the double bond included in the side chain is determined by (degree of polymerization)×(vinyl content)/100.

Further, the number of moles of the double bond included in the side chain per mole of a isoprene homopolymer can be calculated as follows. The degree of polymerization of the isoprene homopolymer can be calculated by dividing a number average molecular weight Mn(Ip) of the isoprene homopolymer by the molecular weight (68) of isoprene (Mn(Ip)/68). The isoprene unit bonded by a 1,4-bond that can be contained in the isoprene homopolymer does not have a carbon-carbon double bond in the side chain. On the other hand, the isoprene unit bonded by a 1,2-bond or a 3,4-bond that can be contained in the isoprene homopolymer has one carbon-carbon double bond per isoprene unit in the side chain. Therefore, in the case of the isoprene homopolymer, the number of moles of the double bond included in the side chain is determined by (degree of polymerization)×(vinyl content)/100.

When the monomers are copolymerized, a sum of the number of moles of double bonds included in the side chain calculated for each monomer unit corresponding to each monomer from the degree of polymerization and the vinyl content of each monomer is the number of moles of the double bond included in the side chain of the copolymer. Further, when the conjugated diene-based polymer (A) is a homopolymer of a conjugated diene other than the above

or a copolymer containing a conjugated diene unit other than the above, the number of moles of double bonds included in the side chain of the polymer can be calculated based on the above calculation method.

From the viewpoint of improving the curing rate in peroxide crosslinking, the number of moles of the double bond in the side chain per mole of the polymer is preferably 100 moles or more, and more preferably 200 moles or more. Further, from the viewpoint of handleability of the polymer, the number of moles of the double bond in the side chain per mole of the polymer is usually 2,000 moles or less, preferably 1,800 moles or less, and more preferably 1,500 moles or less.

The number of moles of the double bond in the side chain per mole of the polymer can be controlled by the vinyl content and the degree of polymerization. For example, in the case of producing the conjugated diene-based polymer (A) by a solution polymerization method by anionic polymerization as described later, the number of moles of the double bond in the side chain per mole of the polymerization can be controlled by adjusting an amount of a polar compound added, a polymerization temperature, the content of butadiene contained in monomer mixture to be added, the content of β-farnesene, and an amount of a monomer added to an initiator.

The conjugated diene-based polymer (A) is obtained by polymerizing a monomer containing a conjugated diene by, for example, an emulsion polymerization method or a solution polymerization method so that the number of moles of the double bond in the side chain per mole of the polymer is a desired value.

As the emulsion polymerization method, a known method or a method according to the known method can be used. For example, monomers containing a predetermined amount of the conjugated diene is emulsified and dispersed in the presence of an emulsifier, and emulsion polymerized by a radical polymerization initiator.

Examples of the emulsifier include long-chain fatty acid salts and rosin acid salts having 10 or more carbon atoms. Examples of the long-chain fatty acid salt include potassium salts or sodium salts of fatty acids such as capric acid, lauric acid, myristic acid, palmitic acid, oleic acid, and stearic acid.

Water is usually used as a dispersion medium, and may include a water-soluble organic solvent such as methanol and ethanol to the extent that stability during polymerization is not inhibited.

Examples of the radical polymerization initiator include persulfates such as ammonium persulfate and potassium persulfate, organic peroxides, and hydrogen peroxide.

In order to adjust the molecular weight of the conjugated diene-based polymer (A) to be obtained, a chain transfer agent may be used. Examples of the chain transfer agent include mercaptans such as t-dodecyl mercaptan and n-dodecyl mercaptan, carbon tetrachloride, thioglycolic acid, diterpene, terpinolene, γ-terpinene, and α-methylstyrene dimer.

The temperature of the emulsion polymerization can be appropriately set depending on, for example, the type of the radical polymerization initiator to be used, and is usually in the range of 0°C to100°C, preferably in the range of 0°C to 60°C. The polymerization mode may be either continuous polymerization or batch polymerization.

The polymerization reaction can be stopped by addition of a polymerization terminator. Examples of the polymerization terminator include amine compounds such as isopropylhydroxylamine, diethylhydroxylamine, and hydroxylamine, quinone-based compounds such as hydroquinone and benzoquinone, and sodium nitrite.

After the polymerization reaction is stopped, an anti-aging agent may be added as necessary. After the polymerization reaction is stopped, unreacted monomers are removed from the resulting latex as necessary, then the conjugated diene-based polymer (A) is coagulated while a pH of a coagulation system is adjusted to a predetermined value by using a salt such as sodium chloride, calcium chloride, or potassium chloride as a coagulant and adding an acid such as nitric acid or sulfuric acid as necessary, and then the dispersion medium is separated to recover the conjugated diene-based polymer (A). Subsequently, the conjugated diene-based polymer (A) is obtained by washing with water, dehydration, and then drying. Note that at the time of coagulation, if necessary, the latex and an extender oil formed into an emulsion dispersion liquid may be mixed in advance and recovered as an oil-extended conjugated diene-based polymer (A).

As the solution polymerization method, a known method or a method conforming to the known method can be used. For example, in a solvent, a Ziegler-based catalyst, a metallocene-based catalyst, an anionically polymerizable active metal or an active metal compound is used, preferably the anionically polymerizable active metal or the active metal compound is used, to polymerize monomers containing a conjugated diene, optionally in the presence of the polar compound.

Examples of the solvent include aliphatic hydrocarbons such as n-butane, n-pentane, isopentane, n-hexane, n-heptane, and isooctane, cycloaliphatic hydrocarbons such as cyclopentane, cyclohexane, and methylcyclopentane, and aromatic hydrocarbons such as benzene, toluene, and xylene.

Examples of the anionically polymerizable active metal include alkali metals such as lithium, sodium, and potassium, alkaline earth metals such as beryllium, magnesium, calcium, strontium, and barium, lanthanoid-based rare earth metals such as lanthanum and neodymium.

Among anionically polymerizable active metals, the alkali metals and the alkaline earth metals are preferred, and the alkali metals are more preferred.

The anionically polymerizable active metal compound is preferably an organic alkali metal compound. Examples

of the organic alkali metal compound include organic monolithium compounds such as methyllithium, ethyllithium, n-butyllithium, sec-butyllithium, t-butyllithium, hexyllithium, phenyllithium, and stilbene lithium, polyfunctional organolithium compounds such as dilithiomethane, dilithionaphthalene, 1,4-dithiobutane, 1,4-dilithio-2-ethylcyclohexane, and 1,3,5-trithiobenzene, sodium naphthalene, and potassium naphthalene. Among these organic alkali metal compounds, organic lithium compounds are preferred, and the organic monolithium compounds are more preferable.

An amount of the organic alkali metal compound to be used can be appropriately set according to the conjugated diene-based polymer (A) and, for example, the molecular weight and the melt viscosity of the conjugated diene-based polymer (A), but is usually used in an amount of 0.01 to 3 parts by mass with respect to 100 parts by mass of the total monomers containing a conjugated diene.

The organic alkali metal compound can also be used as an organic alkali metal amide by reacting with a secondary amine such as dibutylamine, dihexylamine, or dibenzylamine.

The polar compound is usually used for adjusting a microstructure of the conjugated diene unit without deactivating the reaction in the anionic polymerization. Examples of the polar compound include ether compounds such as dibutyl ether, tetrahydrofuran, and ethylene glycol diethyl ether, tertiary amines such as tetramethylethylenediamine and trimethylamine, alkali metal alkoxides, and phosphine compounds. The polar compound is usually used in an amount of 0.01 to 1,000 mol with respect to 1 mol of the organic alkali metal compound.

The temperature of the solution polymerization is usually in the range of -80°C to 150°C, preferably in the range of 0°C to 100°C, and more preferably in the range of 10°C to 90°C. The polymerization mode may be either a batch type or a continuous type.

The polymerization reaction can be stopped by addition of the polymerization terminator. Examples of the polymerization terminator include alcohols such as methanol and isopropanol. The resulting polymerization reaction solution is poured into a poor solvent such as methanol to precipitate the conjugated diene-based polymer (A), or the polymerization reaction solution is washed with water, separated, and then dried, so that the conjugated diene-based polymer (A) can be isolated.

As a method for producing the conjugated diene-based polymer (A), the solution polymerization method is preferred among the above methods.

The conjugated diene-based polymer (A) is the polymer containing a conjugated diene unit produced as described above, and in a preferred form, is an unmodified polymer that is not modified with, for example, a functional group.

The number average molecular weight (Mn) of the conjugated diene-based polymer (A) is preferably 9,000 to 500,000, more preferably 9,000 to 200,000, still more preferably 9,000 to 120,000, and even more preferably 20,000 to 120,000. When the Mn of the conjugated diene-based polymer (A) is within the above range, the handleability is excellent, and physical properties of the curable composition containing the conjugated diene-based polymer (A) are also excellent. Further, when the Mn exceeds the upper limit value, the viscosity tends to increase and the handleability tends to deteriorate. On the other hand, when the Mn is less than the lower limit, sufficient curability and adhesive strength tend not to be obtained. Note that in the present invention, the Mn is the number average molecular weight in terms of polystyrene determined from the measurement of GPC.

A molecular weight distribution (Mw/Mn) of the conjugated diene-based polymer (A) is preferably 1.0 to 2.0, more preferably 1.0 to 1.5, still more preferably 1.0 to 1.2, and even more preferably 1.0 to 1.1. When the Mw/Mn is within the above range, the handleability of the conjugated diene-based polymer (A) at normal temperature is excellent, and a composition with less bleeding out of low molecular weight components is obtained. When the Mw/Mn is within the above range, the curing rate is excellent, and a range of variation of the curing rate can also be suppressed. Note that the molecular weight distribution (Mw/Mn) means a ratio of weight average molecular weight (Mw)/number average molecular weight (Mn) in terms of polystyrene determined by the measurement of GPC.

A glass transition temperature (Tg) of the conjugated diene-based polymer (A) can vary depending on, for example, the vinyl content of the conjugated diene unit, the type of the conjugated diene, and the content of a unit derived from a monomer other than the conjugated diene, but is preferably -100°C to 30°C, more preferably -100°C to 20°C, and still more preferably -100°C to 10°C. When the Tg is in the above range, for example, the processability and adhesiveness of the curable composition containing the conjugated diene-based polymer (A) are improved. Further, an increase in viscosity can be suppressed, and handling is facilitated.

Furthermore, from the viewpoint of further improving low-temperature flexibility and low-temperature impact resistance of the cured product obtained by crosslinking the curable composition of the present invention, the Tg of the conjugated diene-based polymer (A) is preferably -100°C to - 30°C, more preferably -100°C to -50°C, still more preferably -100°C to -60°C, and even more preferably -100°C to -65°C.

The vinyl content of the conjugated diene-based polymer (A) is preferably 99 mol% or less, more preferably 90 mol% or less, still more preferably 80 mol% or less, and even more preferably 70 mol% or less. Further, the vinyl content of the conjugated diene-based polymer (A) is preferably 1 mol% or more, more preferably 3 mol% or more, still more preferably 5 mol% or more, and even more preferably 10 mol% or more. Note that in the present invention, the "vinyl content " means the total mol% of conjugated diene units (conjugated diene unit bonded at a bond other than a

1,4-bond (case other than β-farnesene) and a 1,13-bond (case of β-farnesene)) bonded through a 1,2-bond, a 3,4-bond (case other than β-farnesene), and a 3,13-bond (case of β-farnesene) with respect to the total 100 mol% of the conjugated diene units contained in the conjugated diene-based polymer (A). The vinyl content is calculated, using $^1$H-NMR, from an area ratio of a peak derived from a structural unit derived from a conjugated diene bonded by the 1,2-bond, the 3,4-bond (case other than β-farnesene), and the 3,13-bond (case of β-farnesene) to a peak derived from a structural unit derived from a conjugated diene bonded by the 1,4-bond (case other than β-farnesene) and the 1,13-bond (case of β-farnesene).

In a preferred aspect, the conjugated diene-based polymer (A) is used in an unhydrogenated state without being hydrogenated. The conjugated diene-based polymer (A) may be used in a hydrogenated state, but it is desirable that all of the carbon-carbon double bonds derived from a conjugated diene compound in the conjugated diene-based polymer (A) are not hydrogenated (the conjugated diene-based polymer (A) is a partially hydrogenated conjugated diene copolymer) from the viewpoint of the curing rate, compatibility with other materials, and mechanical properties and heat resistance after curing. From the same viewpoint as described above, when the conjugated diene-based polymer (A) is a partially hydrogenated conjugated diene-based polymer, a hydrogenation rate of the carbon-carbon double bond derived from the conjugated diene compound of the conjugated diene-based polymer (A) is preferably 70 mol% or less, more preferably 50 mol% or less, still more preferably 30 mol% or less, and even more preferably 10 mol% or less.

The melt viscosity of the conjugated diene-based polymer (A) measured at 38°C is preferably in the range of 0.1 to 3,000 Pa·s, more preferably in the range of 1 to 2,000 Pa-s, and still more preferably in the range of 2 to 600 Pa·s. When the melt viscosity of the conjugated diene-based polymer (A) at 38°C is within the above range, the handleability of the conjugated diene-based polymer (A) and the composition thereof is improved. Note that in the present invention, the melt viscosity is a value measured with a Brookfield viscometer.

The conjugated diene-based polymer (A) may be used alone or in combination of two or more thereof.

When two or more of the conjugated diene-based polymer (A) are used in combination, it is also one of preferred forms to combine a conjugated diene-based copolymer (A1) having a glass transition temperature (Tg) of -20°C or higher with a conjugated diene-based copolymer (A2) having a glass transition temperature (Tg) of -60°C or lower. By adopting such a form, the cured product obtained from the curable composition of the present invention more easily exhibits a practically sufficient loss factor (tan δ) in a wide temperature range including a low temperature range, and can exhibit excellent acoustic damping properties.

[Crosslinking agent (B)]

The curable composition of the present invention further contains the crosslinking agent (B) in order to crosslink the rubber component containing the conjugated diene-based polymer (A). Examples of the crosslinking agent (B) include peroxides such as hydrogen peroxide and organic peroxides, sulfur, sulfur compounds, oxygen, phenol resins, amino resins, quinone and quinone dioxime derivatives, halogen compounds, aldehyde compounds, alcohol compounds, epoxy compounds, metal halides and organometallic halides, and silane compounds. Among these crosslinking agents (B), from the viewpoint of the curability of the curable composition of the present invention, peroxides, sulfur, and sulfur compounds are preferred, and from the viewpoint of achieving both environmental compatibility and curability, peroxides are more preferred and organic peroxides are still more preferred.

Examples of the organic peroxides include cyclohexanone peroxide, methylacetoacetate peroxide, tert-butyl peroxyisobutyrate, tert-butyl peroxybenzoate, benzoyl peroxide, 1,1-di-(tert-butylperoxy)-3,3,5-trimethylcyclohexane, butyl-4,4-di-(tert-butylperoxy)valeric acid, lauroyl peroxide, dicumyl peroxide, di-tert-butyl peroxide, 1,3-bis(tert-butylperoxyisopropyl)benzene, di-(2-tert-butylperoxyisopropyl)benzene, tert-butylcumyl peroxide, 2,5-dimethyl-2,5-di-(tert-butylperoxy)hexane, 2,5-dimethyl-2,5-di-(tert-butylperoxy)hexa-3-yne, di-(3,3,5-trimethylhexanoyl)peroxide, t-butylperoxypivalate, 1,1,3,3-tetramethylbutylperoxy-2-ethylhexanoate, di-lauroyl peroxide, disuccinic acid peroxide, 2,5-dimethyl-2,5-di-(tert-butylperoxy) hexane, tert-hexylperoxy-2-ethylhexanoate, tert-butylperoxy-2-ethylhexanoate, di-(3-methylbenzoyl)peroxide, 1,1-di(tert-hexylperoxy)cyclohexane, 1,1-di(tert-butylperoxy) cyclohexane, 2,2-di(4,4-di(tert-butylperoxy)cyclohexyl)propane, tert-hexylperoxyisopropyl monocarbonate, tert-butylperoxy-3,5,5-trimethylhexanoate, tert-butylperoxyisopropyl monocarbonate, tert-butyl peroxylaurate, tert-butylperoxy-2-ethylhexyl monocarbonate, tert-hexyl peroxybenzoate, 2,5-dimethyl-2,5-di-(benzoylperoxy)hexane, tert-butyl peroxyacetate, and 2,2-di(tert-butylperoxy)butane.

Examples of the sulfur compound include thiuram disulfide, morpholine disulfide, and alkylphenol disulfide.

Examples of other crosslinking agents (B) include substances capable of crosslinking rubber components such as quinone, quinone dioxime (particularly p-benzoquinone dioxime), nitrosobenzene, dinitrosobenzene (particularly p-dinitrosobenzene), and triallyl isocyanurate.

A one-minute half-life temperature of the crosslinking agent (B) is preferably 110°C to 190°C, more preferably 130°C to 180°C, and still more preferably 150°C to 170°C. Among the crosslinking agents (B) having a suitable one-minute half-life temperature, dicumyl peroxide, t-butyl peroxybenzoate, 1,1-bis(1,1-dimethylethylperoxy)cyclohexane,

2,5-dimethyl-2,5-di-(tert-butylperoxy)hexane, tert-butyl cumyl peroxide, di-tert-butyl peroxide, di- (3,3,5-trimethylhexanoyl) peroxide, 1,1-di(tert-hexylperoxy)cyclohexane, and tert-butyl peroxylaurate are preferred, t-butyl peroxybenzoate, 1,1-bis(1,1-dimethylethylperoxy)cyclohexane, dicumyl peroxide, 1,1-di(tert-hexylperoxy)cyclohexane, and tert-butyl peroxylaurate are more preferred, and 1,1-bis(1,1-dimethylethylperoxy)cyclohexane and tert-butyl peroxylaurate are still more preferred.

Among these crosslinking agents (B), an organic peroxide is a preferred form from the viewpoint of excellent corrosion resistance of the curable composition of the present invention. When crosslinking is performed by the organic peroxide, for example, in an automobile coating process, corrosion to, for example, metals and plastics can be reduced.

These crosslinking agents (B) may be used alone or in combination of two or more thereof.

The content of the crosslinking agent (B) is preferably 0.1 to 10 parts by mass, more preferably 0.5 to 10 parts by mass, and still more preferably 0.8 to 10 parts by mass with respect to 100 parts by mass of the rubber component containing the conjugated diene-based polymer (A) from the viewpoint of mechanical properties of the cured product.

The curable composition of the present invention may further contain a vulcanization accelerator when, for example, sulfur and the sulfur compound are contained as the crosslinking agent (B) for crosslinking (vulcanizing) the rubber. Examples of the vulcanization accelerator include guanidine-based compounds, sulfenamide-based compounds, thiazole-based compounds, thiuram-based compounds, thiourea-based compounds, dithiocarbamic acid-based compounds, aldehyde-amine-based compounds, aldehyde-ammonia-based compounds, imidazoline-based compounds, and xanthate-based compounds.

These vulcanization accelerators may be used alone or in combination of two or more thereof.

The content of the vulcanization promoter is preferably 0.1 to 15 parts by mass, and more preferably 0.1 to 10 parts by mass with respect to 100 parts by mass of the rubber component containing the conjugated diene-based polymer (A).

The curable composition of the present invention may further contain a vulcanization aid when, for example, sulfur and the sulfur compound are contained as the crosslinking agent (B) for crosslinking (vulcanizing) the rubber. Examples of the vulcanization aid include fatty acids such as stearic acid, metal oxides such as zinc flower, and fatty acid metal salts such as zinc stearate.

These vulcanization aids may be used alone or in combination of two or more thereof.

The content of the vulcanization aid is preferably 0.1 to 15 parts by mass, and more preferably 0.5 to 10 parts by mass with respect to the rubber component containing the conjugated diene-based polymer (A).

The curable composition of the present invention may further contain a crosslinking aid (E) in addition to the crosslinking agent (B). Examples of the crosslinking aid (E) include allyl compounds such as triallyl isocyanurate (TAIC) and diallyl phthalate, trimethylolpropane trimethacrylate (TMP), ethylene glycol dimethacrylate, maleimide-based compounds, quinone dioxime, divinylbenzene, and (meth)acryloyl group-modified conjugated diene-based polymers (however, different from the conjugated diene-based polymer (A)).

When the crosslinking aid (E) is contained in the curable composition of the present invention, in a preferred form, the crosslinking aid (E) contains the (meth)acryloyl group-modified conjugated diene-based polymer.

An unmodified conjugated diene-based polymer to be a raw material of the (meth)acryloyl group-modified conjugated diene-based polymer can be produced by polymerizing a conjugated diene. As the unmodified conjugated diene-based polymer, polyisoprene and polybutadiene are preferred, and polyisoprene is more preferred. The unmodified conjugated diene-based polymer can be produced by the same method as the conjugated diene-based polymer (A) described above.

A method for producing the (meth)acryloyl group-modified conjugated diene-based polymer is not particularly limited, but for example, a method of adding maleic anhydride to the unmodified conjugated diene-based polymer produced by the above method to obtain a maleic anhydride-modified conjugated diene-based polymer, then reacting the maleic anhydride-modified conjugated diene-based polymer with a (meth)acrylate having a hydroxyl group (meaning an acrylate and/or methacrylate having a hydroxyl group), and performing an esterification reaction of the maleic anhydride can be employed as a preferred method.

The method of adding maleic anhydride is not particularly limited, and examples thereof include a method in which maleic anhydride and, if necessary, a radical catalyst are added to the unmodified conjugated diene-based polymer, and heating is performed in the presence or absence of an organic solvent.

Examples of the (meth)acrylate having a hydroxyl group include 2-hydroxyethyl(meth)acrylate and 2-hydroxypropyl(meth)acrylate. These (meth)acrylates may be used alone or in combination of two or more thereof. Among these (meth)acrylates having a hydroxyl group, 2-hydroxyethyl(meth)acrylate is preferred.

The (meth)acryloyl group-modified conjugated diene-based polymer can be used without particular limitation as long as it can exhibit an effect as the crosslinking aid, but the number average molecular weight thereof is preferably in the range of 5,000 to 200,000, more preferably in the range of 8,000 to 100,000, and still more preferably in the range of 11,000 to 60,000. When the number average molecular weight of the (meth)acryloyl group-modified conjugated diene-based polymer is in the above range, it tends to be excellent in performance as the cross-linking aid and excellent in

workability for preparing the curable composition.

The (meth)acryloyl group-modified conjugated diene-based polymer has a (meth)acrylic equivalent (meaning an acrylic equivalent and/or a methacrylic equivalent) of preferably 700 to 20,000 g/eq, more preferably 1,100 to 15,000 g/eq, and still more preferably 2,000 to 10,000 g/eq. When the (meth)acrylic equivalent of the (meth)acryloyl group-modified conjugated diene-based polymer is in the above range, that is, in the range of 700 g/eq to 20,000 g/eq, the (meth)acryloyl group-modified conjugated diene-based polymer tends to have excellent performance as the crosslinking aid and excellent physical properties as the cured product to be obtained. Note that the (meth)acrylic equivalent in the present specification means a molecular weight per (meth)acryloyl group.

In the curable composition of the present invention, the content of the crosslinking aid (E) with respect to 100 parts by mass of the crosslinking agent (B) is preferably 10 to 1,000 parts by mass, and more preferably 50 to 1,000 parts by mass. When the content of the crosslinking aid (E) is within the above range, the curability of the curable composition tends to be excellent, and the physical properties of the cured product to be obtained also tend to be excellent.

[Filler (C)]

The curable composition of the present invention may contain a filler (C). The filler (C) is blended for the purpose of, for example, improving mechanical strength, improving physical properties such as heat resistance or weather resistance, adjusting hardness, and increasing an amount of the rubber. Examples of the filler (C) include inorganic fillers such as calcium carbonate, calcium oxide, magnesium hydroxide, magnesium oxide, magnesium carbonate, aluminum hydroxide, barium sulfate, barium oxide, iron oxide, zinc carbonate, clays such as waxy clay, kaolin clay, and fired clay, mica, diatomaceous earth, carbon black, silica, glass fibers, carbon fibers, fibrous fillers, and glass balloons; resin particles formed from resins such as crosslinked polyester, polystyrene, styrene-acrylic copolymer resin, and urea resin; synthetic fibers; and natural fibers.

Note that when the filler (C) is particulate, a shape of the particles can take various shapes such as spherical shape according to, for example, desired physical properties. Further, when the filler (C) is particulate, the filler (C) may be either solid particles or hollow particles, or core-shell type particles formed of, for example, a plurality of materials according to, for example, the desired physical properties. Further, these fillers (C) may be surface-treated with various compounds such as fatty acid, resin acid, fatty acid ester, and a silane coupling agent.

Among these fillers (C), calcium carbonate, carbon black, and silica are preferred, and calcium carbonate and carbon black are more preferred from the viewpoint of, for example, reinforcing properties, price, and ease of the handling of the curable composition to be obtained and a cured product thereof. These fillers (C) may be used alone or in combination of two or more thereof.

In the curable composition of the present invention, the content of the filler (C) with respect to 100 parts by mass of the rubber component containing the conjugated diene-based polymer (A) is preferably 0.1 to 1,500 parts by mass, more preferably 1 to 1,300 parts by mass, still more preferably 5 to 1,000 parts by mass, and even more preferably 10 to 800 parts by mass. When the content of the filler (C) is within the above range, the processability and the adhesiveness of the curable composition are good.

[Foaming agent (G)]

The curable composition of the present invention may contain a foaming agent (G). Examples of the foaming agent (G) include various foaming agents that can be used for a resin composition, such as a chemical foaming agent that releases a gas by decomposition, a physical foaming agent, and a foaming agent used for so-called bead foaming. Examples of the chemical foaming agent include azobisisobutyronitrile, azodicarbonamide, dinitrosopentamethylenetetramine, 4,4'-oxybis(benzenesulfonic acid hydrazide), diphenylsulfone-3,3'-disulfohydrazide, benzene-1,3-disulfohydrazide, and p-toluenesulfonyl semicarbazide. As the foaming agent used for bead blowing, one based on a vinylidene chloride copolymer or acrylonitrile/(meth)acrylate is particularly preferred. Among these foaming agents (G), the chemical foaming agent is preferred, and azodicarbonamide and 4,4'-oxybis(benzenesulfonic acid hydrazide) are more preferred from the viewpoint of, for example, foamability, price, and ease of the handling. These foaming agents (G) may be used alone or in combination of two or more thereof.

In the curable composition of the present invention, the content of the foaming agent (G) with respect to 100 parts by mass of the rubber component containing the conjugated diene-based polymer (A) is preferably 0.1 to 10 parts by mass, more preferably 0.5 to 8 parts by mass, and still more preferably 1 to 5 parts by mass. When the content of the foaming agent (G) is within the above range, the foamability of the curable composition is good.

[Solid rubber (D)]

The curable composition of the present invention may contain a solid rubber.

When the curable composition of the present invention contains the conjugated diene-based polymer (A) and a solid rubber (D), the rubber component includes the conjugated diene-based polymer (A) and the following solid rubber (D). This rubber component may include 1 to 99 mass% of the conjugated diene-based polymer (A) and 99 to 1 mass% of the solid rubber (D), but preferably includes 1 to 95 mass% of the liquid diene-based rubber (A) and 99 to 5 mass% of the solid rubber (D), more preferably includes 10 to 90 mass% of the conjugated diene-based polymer (A) and 90 to 10 mass% of the solid rubber (D), and still more preferably includes 20 to 80 mass% of the conjugated diene-based polymer (A) and 80 to 20 mass% of the solid rubber (D). When a blending ratio of the conjugated diene-based polymer (A) and the solid rubber (D) is in the above range, breaking strength, elongation at break, and the adhesiveness of the curable composition are improved.

The solid rubber (D) used in the curable composition of the present invention refers to a rubber that can be handled in a solid state at 20°C, and a Mooney viscosity $ML_{1+4}$ of the solid rubber (D) at 100°C is usually in the range of 20 to 200. Examples of the solid rubber (D) include natural rubber, polyisoprene rubber, polybutadiene rubber, styrene-butadiene copolymer rubber, styrene-isoprene copolymer rubber, acrylonitrile-butadiene copolymer rubber, chloroprene rubber, ethylene propylene rubber, and butyl rubber.

The weight average molecular weight (Mw) of the solid rubber (D) is preferably 80,000 or more, and more preferably in the range of 100,000 to 3,000,000 from the viewpoint of sufficiently exhibiting characteristics of the curable composition to be obtained.

Examples of the natural rubber include natural rubbers generally used in tire industry, such as TSR such as SMR, SIR, and STR, and RSS, high purity natural rubber, and modified natural rubbers such as epoxidized natural rubber, hydroxylated natural rubber, hydrogenated natural rubber, and grafted natural rubber. Among them, SMR20, STR20, and RSS#3 are preferred from the viewpoint of little variation in quality and availability. These natural rubbers may be used alone or in combination of two or more thereof.

As the polyisoprene rubber, for example, commercially available polyisoprene rubber can be used, the polyisoprene rubber being polymerized using a Ziegler-type catalyst such as a titanium tetrahalide-trialkylaluminum-based catalyst, a diethylaluminum chloride-cobalt-based catalyst, a trialkylaluminum-boron trifluoride-nickel-based catalyst, or a diethylaluminum chloride-nickel-based catalyst; a lanthanoid-based rare earth metal catalyst such as a triethylaluminum-organic acid neodymium-Lewis acid-based catalyst; or an organic alkali metal compound in the same manner as solution-polymerized styrene-butadiene copolymer rubber (hereinafter also referred to as S-SBR). The polyisoprene rubber polymerized with the Ziegler-type catalyst has a high cis-isomer content and is preferred. Further, a polyisoprene rubber having an ultrahigh cis-isomer content obtained using the lanthanoid-based rare earth metal catalyst may be used.

The vinyl content of the polyisoprene rubber is preferably 50 mol% or less, more preferably 40 mol% or less, and still more preferably 30 mol% or less. When the vinyl content is more than 50 mol%, flexibility of the curable composition at a low temperature tends to decrease. A lower limit of the vinyl content is not particularly limited. Further, the glass transition temperature varies depending on the vinyl content, but is preferably -20°C or lower, and more preferably -30°C or lower.

The weight average molecular weight (Mw) of the polyisoprene rubber is preferably 90,000 to 2,000,000, and more preferably 150,000 to 1,500,000. When the Mw is in the above range, the processability and the mechanical strength are good.

A part of the polyisoprene rubber may have a branched structure or a polar functional group by using a polyfunctional modifying agent, for example, a modifying agent such as tin tetrachloride, silicon tetrachloride, an alkoxysilane having an epoxy group in the molecule, or an amino group-containing alkoxysilane as long as an effect of the present invention is not impaired.

As the polybutadiene rubber, for example, commercially available polybutadiene rubber can be used, the polybutadiene rubber being polymerized using a Ziegler-type catalyst such as a titanium tetrahalide-trialkylaluminum-based catalyst, a diethylaluminum chloride-cobalt-based catalyst, a trialkylaluminum-boron trifluoride-nickel-based catalyst, or a diethylaluminum chloride-nickel-based catalyst; a lanthanoid-based rare earth metal catalyst such as a triethylaluminum-organic acid neodymium-Lewis acid-based catalyst; or an organic alkali metal compound in the same manner as S-SBR. The polybutadiene rubber polymerized with the Ziegler-type catalyst has a high cis-isomer content and is preferred. Further, a polybutadiene rubber having an ultrahigh cis-isomer content obtained using the lanthanoid-based rare earth metal catalyst may be used.

The vinyl content of the polybutadiene rubber is preferably 50 mol% or less, more preferably 40 mol% or less, and still more preferably 30 mol% or less. When the vinyl content is more than 50 mol%, the flexibility of the curable composition at a low temperature tends to decrease. The lower limit of the vinyl content is not particularly limited. Further, the glass transition temperature varies depending on the vinyl content, but is preferably -40°C or lower, and more preferably -50°C or lower.

The weight average molecular weight (Mw) of the polybutadiene rubber is preferably 90,000 to 2,000,000, and more preferably 150,000 to 1,500,000. When the Mw is in the above range, the processability and the mechanical strength are good.

A part of the polybutadiene rubber may have a branched structure or a polar functional group by using the polyfunctional modifying agent, for example, the modifying agent such as tin tetrachloride, silicon tetrachloride, the alkoxysilane having an epoxy group in the molecule, or the amino group-containing alkoxysilane as long as the effect of the present invention is not impaired.

As the styrene-butadiene copolymer rubber (hereinafter also referred to as SBR), an appropriate SBR can be used depending on, for example, the application, and specifically, SBR having a styrene content of 0.1 to 70 mass% is preferred, SBR having a styrene content of 5 to 50 mass% is more preferred, and SBR having a styrene content of 10 to 40 mass% is still more preferred. Further, SBR having a vinyl content of 0.1 to 60 mol% is preferred, and SBR having a vinyl content of 0.1 to 55 mol% is more preferred.

The weight average molecular weight (Mw) of the SBR is preferably 100,000 to 2,500,000, more preferably 150,000 to 2,000,000, and still more preferably 200,000 to 1,500,000. When the weight average molecular weight is in the above range, both the processability and the mechanical strength can be achieved.

The glass transition temperature of the SBR used in the present invention determined by differential thermal analysis is preferably -95°C to 0°C, and more preferably - 95°C to -5°C. By adjusting the glass transition temperature within the above range, the increase in viscosity can be suppressed, and the handling is facilitated.

The SBR that can be used in the present invention is obtained by copolymerizing styrene and butadiene. A method for producing the SBR is not particularly limited, and any of the emulsion polymerization method, the solution polymerization method, a gas phase polymerization method, and a bulk polymerization method can be used, and among these production methods, the emulsion polymerization method and the solution polymerization method are preferred.

Emulsion polymerization styrene-butadiene copolymer rubber (hereinafter also referred to as E-SBR) can be produced by a known method or a conventional emulsion polymerization method according to the known method. For example, the E-SBR is obtained by emulsifying and dispersing predetermined amounts of styrene and butadiene monomers in the presence of the emulsifier, and performing emulsion polymerization with the radical polymerization initiator.

The S-SBR can be produced by a conventional solution polymerization method, and for example, styrene and butadiene are polymerized in the presence of the polar compound as desired using the anionically polymerizable active metal in the solvent.

Examples of the solvent include aliphatic hydrocarbons such as n-butane, n-pentane, isopentane, n-hexane, n-heptane, and isooctane, cycloaliphatic hydrocarbons such as cyclopentane, cyclohexane, and methylcyclopentane, and aromatic hydrocarbons such as benzene and toluene. These solvents are usually preferably used in a range where the monomer concentration is 1 to 50 mass%.

Examples of the anionically polymerizable active metal include alkali metals such as lithium, sodium, and potassium, alkaline earth metals such as beryllium, magnesium, calcium, strontium, and barium, lanthanoid-based rare earth metals such as lanthanum and neodymium. Among the anionically polymerizable active metals, the alkali metals and the alkaline earth metals are preferred, and the alkali metals are more preferred. Furthermore, among the alkali metals, the organic alkali metal compound is more preferably used.

Examples of the organic alkali metal compound include organic monolithium compounds such as n-butyllithium, sec-butyllithium, t-butyllithium, hexyllithium, phenyllithium, and stilbenelithium, polyfunctional organolithium compounds such as dilithiomethane, 1,4-dilithiobutane, 1,4-dilithio-2-ethylcyclohexane, and 1,3,5-trithiobenzene, sodium naphthalene, and potassium naphthalene. Among these organic alkali metal compounds, organic lithium compounds are preferred, and the organic monolithium compounds are more preferred. The amount of the organic alkali metal compound to be used is appropriately determined according to the molecular weight of the S-SBR required.

The organic alkali metal compound can also be used as the organic alkali metal amide by reacting with the secondary amine such as dibutylamine, dihexylamine, or dibenzylamine.

The polar compound is not particularly limited as long as it is one that is usually used for adjusting the microstructure of the butadiene unit, and distribution of styrene units in a copolymer chain without deactivating the reaction in the anionic polymerization, and examples thereof include ether compounds such as dibutyl ether, tetrahydrofuran, and ethylene glycol diethyl ether, tertiary amines such as tetramethylethylenediamine and trimethylamine, alkali metal alkoxides, and phosphine compounds.

The temperature of the polymerization reaction is usually in the range of -80°C to 150°C, preferably in the range of 0°C to 100°C, and more preferably in the range of 30°C to 90°C. The polymerization mode may be either the batch type or the continuous type. Further, in order to improve random copolymerizability of styrene and butadiene, it is preferable to continuously or intermittently supply styrene and butadiene into the reaction solution so that a composition ratio of styrene and butadiene in a polymerization system falls within a specific range.

The polymerization reaction can be stopped by adding an alcohol such as methanol or isopropanol as the polymerization terminator. In a polymerization solution after the polymerization reaction is stopped, the solvent can be separated by, for example, direct drying or steam stripping to recover target S-SBR. Note that before removing the solvent, the polymerization solution and the extender oil may be mixed in advance and recovered as oil-extended rubber.

As the SBR, modified SBR in which a functional group is introduced into the SBR may be used as long as the

effect of the present invention is not impaired. Examples of the functional group include an amino group, an alkoxysilyl group, a hydroxyl group, an epoxy group, and a carboxyl group.

Examples of a method for producing the modified SBR include a method in which, before the polymerization terminator is added, a coupling agent capable of reacting with a polymerization active terminal, such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane, or 2,4-tolylene diisocyanate, a polymerization terminal modifying agent such as 4,4'-bis(diethylamino)benzophenone or N-vinylpyrrolidone, or another modifying agent described in JP 2011-132298 A is added.

In this modified SBR, a position at which the functional group is introduced may be a terminal of the polymer or a side chain of the polymer.

As the styrene-isoprene copolymer rubber, the acrylonitrile-butadiene copolymer rubber, the chloroprene rubber, the ethylene propylene rubber (such as EPM or EPDM), and the butyl rubber, commercially available products can be used without particular limitation.

[Another polymer (F)]

The curable composition of the present invention may contain another polymer (F). However, the polymer (F) does not contain components corresponding to the above (A) to (E). Further, in a preferred form, the polymer (F) is an unmodified polymer that is not modified with, for example, the functional group. The other polymer (F) is not particularly limited, and examples thereof include a conjugated diene-based polymer (F1) having less than 100 moles of a double bond in the side chain per mole of the polymer. Preferred examples of the conjugated diene-based polymer (F1) include a copolymer of the aromatic vinyl compound and the conjugated diene (hereinafter also referred to as an aromatic vinyl compound/conjugated diene copolymer (F1-1)). The glass transition temperature (Tg) of the polymer (F) is preferably -20°C to 200°C. Note that the conjugated diene-based polymer (F1) may not have a double bond in the side chain.

The content of the aromatic vinyl compound unit in the aromatic vinyl compound/conjugated diene copolymer (F1-1) that is a preferred example of the conjugated diene-based polymer (F1) is preferably 10 mass% or more, more preferably 15 mass% or more, and still more preferably 20 mass% or more with respect to all monomer units. Further, the content of the aromatic vinyl compound unit in the aromatic vinyl compound/conjugated diene copolymer (F1-1) is preferably 70 mass% or less, more preferably 60 mass% or less, and still more preferably 50 mass% or less with respect to all monomer units. When the content of the aromatic vinyl compound unit is within the above range, excellent dissipative vibration damping properties (that is, properties of converting mechanical vibration energy into heat) can be achieved.

The aromatic vinyl compound/conjugated diene copolymer (F1-1) contains the aromatic vinyl compound unit as the monomer unit constituting the polymer. Examples of the aromatic vinyl compound include styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl) styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. Among these aromatic vinyl compounds, styrene is preferred.

The aromatic vinyl compound/conjugated diene copolymer (F1-1) contains the conjugated diene unit as the monomer unit constituting the polymer. Examples of the conjugated diene include conjugated dienes such as butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. The conjugated diene unit contained in the copolymer of the aromatic vinyl and the conjugated diene preferably contains a monomer unit of butadiene.

The aromatic vinyl compound/conjugated diene copolymer (F1-1) may contain a monomer unit other than the conjugated diene unit and the aromatic vinyl compound unit.

As the aromatic vinyl compound/conjugated diene copolymer (F1-1), a polymer obtained by polymerizing the conjugated diene, the aromatic vinyl compound, and other monomers contained as necessary by, for example, the emulsion polymerization method and the solution polymerization method is preferred. The polymerization method is the same as that of the conjugated diene-based polymer (A).

The weight average molecular weight (Mw) of the aromatic vinyl compound/conjugated diene copolymer (F1-1) is preferably 3,000 or more, more preferably 5,000 or more, still more preferably 6,000 or more, even more preferably 7,000 or more, and particularly preferably 8,000 or more. Further, the weight average molecular weight (Mw) of the aromatic vinyl compound/conjugated diene copolymer (F1-1) is preferably 100,000 or less, more preferably 50,000 or less, still more preferably 30,000 or less, even more preferably 25,000 or less, and particularly preferably 20,000 or less. When the Mw is in the above range, the processability and the mechanical strength are good. In the present invention, the Mw is the weight average molecular weight in terms of polystyrene determined from measurement by the gel permeation chromatography (GPC).

The molecular weight distribution (Mw/Mn) of the aromatic vinyl compound/conjugated diene copolymer (F1-1) is preferably 1.0 to 20.0, more preferably 1.0 to 15.0, still more preferably 1.0 to 10.0, even more preferably 1.0 to 5.0, particularly preferably 1.0 to 2.0, more particularly preferably 1.0 to 1.3, and most particularly preferably 1.0 to 1.1. When the Mw/Mn is within the above range, variation in viscosity of the aromatic vinyl compound/conjugated diene copolymer (F1-1) to be obtained is small, which is more preferred.

The melt viscosity of the aromatic vinyl compound/conjugated diene copolymer (F1-1) measured at 38°C is preferably 0.1 to 2,000 Pa·s, more preferably 0.1 to 1500 Pa·s, still more preferably 0.1 to 1000 Pa·s, and even more preferably 0.1 to 500 Pa·s. When the melt viscosity of the aromatic vinyl compound/conjugated diene copolymer (F1-1) is within the above range, the flexibility of the curable composition to be obtained is improved, so that the processability is improved.

The glass transition temperature (Tg) of the aromatic vinyl compound/conjugated diene copolymer (F1-1) is preferably -50°C to 200°C, more preferably -40°C to 150°C, still more preferably -30°C to 100°C, and still more preferably -20°C to 50°C.

By adding the above-mentioned other polymer (F), a curable composition that can be cured under conditions suitable for an automobile baking finish process (for example, heat treatment at about 180°C for about 20 minutes) can be obtained, and it is easier to adjust a peak top temperature of the loss factor (tan $\delta$) of a cured product obtained by curing the curable composition within the range of -60°C to 10°C. As a result, the resulting cured product more easily exhibits a practically sufficient loss factor (tan $\delta$) in the wide temperature range including the low temperature range, and can exhibit excellent acoustic damping properties, which is preferred.

[Oil]

The curable composition of the present invention may contain an oil. The oil is added mainly for improving the processability of the curable composition of the present invention and dispersibility of other compounding agents, and for adjusting the characteristics of the curable composition to a desired range. Examples of the oil include mineral oil, vegetable oil, and synthetic oil.

Examples of the mineral oil include paraffinic oils, naphthenic oils, and aromatic oils. Examples of the vegetable oil include castor oil, cottonseed oil, linseed oil, rapeseed oil, soybean oil, palm oil, coconut oil, and peanut oil. Examples of the synthetic oil include ethylene/a-olefin oligomers and liquid paraffin.

Among these oils, the paraffinic oils, the naphthenic oils, and the aromatic oils are preferred.

These oils may be used alone or in combination of two or more thereof.

In the curable composition of the present invention, the content of the oil with respect to 100 parts by mass of the rubber component containing the conjugated diene-based polymer (A) is preferably 0.1 to 500 parts by mass, more preferably 1 to 450 parts by mass, still more preferably 5 to 400 parts by mass, and even more preferably 8 to 350 parts by mass. When the content of the oil is within the above range, the processability and the adhesiveness of the curable composition are good.

[Other components]

The curable composition of the present invention may optionally contain, within a range that does not impair the effect of the present invention, for the purpose of improving, for example, the processability and fluidity, tackifier resins such as: natural resins such as rosin-based resin (for example, rosin and modified rosin such as hydrogenated rosin, disproportionated rosin, and polymerized rosin) and terpene-based resin (for example, terpene resin, hydrogenated terpene resin, and aromatic modified terpene resin);
and synthetic hydrocarbon resins such as petroleum-based hydrocarbon resin (synthetic polyterpene-based resin, aromatic hydrocarbon resin, aliphatic hydrocarbon resin, alicyclic hydrocarbon resin, C9-based resin, or hydrogenated products thereof), coumarone-indene-based resin, phenol-based resin, xylene-based resin, and styrene-based resin.

Among these tackifier resins, the petroleum-based hydrocarbon resin is preferred.

In a preferred form, the tackifier resin contained in the curable composition contains a tackifier resin having a specific glass transition temperature. The glass transition temperature (Tg) of the tackifier resin is preferably -50°C to 200°C, more preferably -40°C to 150°C, still more preferably -30°C to 100°C, and particularly preferably -20°C to 50°C.

By adding the tackifier resin having such a glass transition temperature, similarly to the polymer (F), a curable composition that can be cured under conditions suitable for an automobile baking finish process (for example, heat treatment at about 180°C for about 20 minutes) can be obtained, and it is easier to adjust the peak top temperature of the loss factor (tan $\delta$) of a cured product obtained by curing the curable composition within the range of -60°C to 10°C. As a result, the resulting cured product more easily exhibits a practically sufficient loss factor (tan $\delta$) in the wide temperature range including the low temperature range, and can exhibit excellent acoustic damping properties, which is preferred.

In addition, the curable composition of the present invention may optionally contain, within a range that does

not impair the effect of the present invention, for the purpose of improving, for example, the weather resistance, the heat resistance, and oxidation resistance, additives such as an anti-aging agent, an antioxidant, a light stabilizer, a scorch inhibitor, a functional group-containing compound, wax, a lubricant, a plasticizer, a processing aid, a pigment, a coloring matter, a dye, other colorants, a flame retardant, an antistatic agent, a matting agent, an antiblocking agent, an ultraviolet absorber, a mold release agent, a foaming agent, an antibacterial agent, an antifungal agent, a fragrance, a dispersant, and a solvent.

Examples of the antioxidant include hindered phenol-based compounds, phosphorus-based compounds, lactone-based compounds, and hydroxyl-based compounds.

Examples of the anti-aging agent include amine-ketone-based compounds, imidazole-based compounds, amine-based compounds, phenol-based compounds, sulfur-based compounds, and phosphorus-based compounds.

In order to improve, for example, the adhesiveness and adhesion between the curable composition and the adherend, the functional group-containing compound may be added. Examples of the functional group-containing compound include functional group-containing alkoxysilanes such as N-β-(aminoethyl)-γ-aminopropyltrimethoxysilane and γ-glycidoxypropyltrimethoxysilane, and functional group-containing acrylates and methacrylates such as 2-hydroxyethylacryloyl phosphate, 2-hydroxyethylmethacryloyl phosphate, nitrogen-containing acrylate, and nitrogen-containing methacrylate. From the viewpoint of the adhesiveness and adhesion, the epoxy group is a preferred aspect as the functional group. Further, in order to improve, for example, the adhesiveness and adhesion between the curable composition and the adherend, a maleic anhydride-modified conjugated diene-based polymer (however, excluding the conjugated diene-based polymer (A)) such as maleic anhydride-modified polybutadiene or maleic anhydride-modified polyisoprene may be added.

Examples of the pigment include inorganic pigments such as titanium dioxide, zinc oxide, ultramarine blue, red iron oxide, lithopone, lead, cadmium, iron, cobalt, aluminum, hydrochloride, and sulfate, and organic pigments such as azo pigments and copper phthalocyanine pigments.

Examples of the antistatic agent include hydrophilic compounds such as quaternary ammonium salts, polyglycols, and ethylene oxide derivatives.

Examples of the flame retardant include chloroalkyl phosphate, dimethyl-methyl phosphonate, bromine-phosphorus compound, ammonium polyphosphate, neopentyl bromide polyether, and brominated polyether. These additives may be used alone or in combination of two or more thereof.

[Method for producing curable composition]

A method for producing the curable composition of the present invention is not particularly limited as long as the above components can be uniformly mixed. Examples of an apparatus for performing the mixing include tangential or meshing closed kneaders such as kneader ruders, Blabender, Banbury mixers, and internal mixers, rotation/revolution mixers, single screw extruders, twin-screw extruders, mixing rolls, and rollers. The mixing can be performed under normal pressure and an air atmosphere, but it is preferable to perform the mixing under reduced pressure or a nitrogen atmosphere from the viewpoint of preventing air bubbles from being mixed in the composition at the time of mixing. The curable composition of the present invention obtained by uniformly dispersing the components in this manner is preferably stored in, for example, a sealed container until used.

[Cured product]

The cured product can be obtained by applying the curable composition of the present invention to, for example, a base material such as an oil surface steel plate as necessary, and then crosslinking the curable composition. Crosslinking conditions of the curable composition can be appropriately set depending on, for example, the application, and the cured product can be produced by performing a crosslinking reaction in a temperature range of, for example, 130°C to 250°C for 10 to 60 minutes.

From the viewpoint of making the acoustic damping properties of the cured product excellent in a wider range, the loss factor (tan δ) of the cured product at -40°C to 0°C is preferably 0.2 or more, more preferably 0.3 or more, and still more preferably 0.5 or more. The loss factor (tan δ) of the cured product at -40°C to 0°C is preferably 3.0 or less. As a further preferable range, the loss factor (tan δ) of the cured product at -50°C to 60°C is preferably 0.2 or more, more preferably 0.3 or more, and still more preferably 0.5 or more. The loss factor (tan δ) of the cured product at -50°C to 60°C is preferably 3.0 or less. When the loss factor (tan δ) value is within the above range, good acoustic damping properties can be exhibited in the wide temperature range including a low temperature range.

From the viewpoint of further improving the low-temperature flexibility and the low-temperature impact resistance of the cured product, a storage elastic modulus (E') (measurement frequency: 10 Hz) at -30°C is preferably 1000MPa or less, more preferably 500MPa or less, and still more preferably 150MPa or less. The storage elastic modulus (E') of the cured product is preferably 0.1MPa or more.

The cured product obtained from the curable composition of the present invention is excellent in adhesiveness evaluated by shear adhesive strength. Further, the cured product is excellent in low-temperature characteristics and impact resistance. The cured product obtained from the curable composition of the present invention can be suitably used for, for example, automobile parts.

[Sealant]

A sealant of the present invention contains the cured product of the curable composition. For example, in the case of producing the sealant using the curable composition of the present invention in an automobile manufacturing line, a sealant containing the cured product at a desired site can be formed by applying the curable composition of the present invention to a desired site (for example, a gap between flanges of a plurality of frame members) of various members, and then crosslinking by heat generated when performing baking and drying in an electrodeposition coating step of a vehicle body.

[Examples]

Hereinafter, the present invention will be described in more detail with reference to Examples, but the present invention is not limited to these Examples.
The components used in the present Examples and Comparative Examples are as follows.

<Conjugated diene-based polymer (A)>

Polybutadiene (A-1), (A-2), poly(β-farnesene) (A-3), (A-4), (A-5), butadiene-β-farnesene copolymer (A-6), (A-7) produced in Production Examples 1 to 7 described later
Polybutadiene (X-1), (X-2), (X-3), (X-4), (X-5), (X-8), polyisoprene (X-6), and poly(β-farnesene) (X-7) produced in Comparative Production Example 1 to 8 described later

<Crosslinking agent (B)>

Organic peroxide (1) dicumyl peroxide (PERCUMYL D manufactured by NOF CORPORATION) one-minute half-life temperature: 175°C
Organic peroxide (2) t-butyl peroxybenzoate (manufactured by FUJIFILM Wako Pure Chemical Corporation) one-minute half-life temperature: 171°C
Organic peroxide (3) 1,1-bis(1,1-dimethylethylperoxy)cyclohexane (PERHEXA C manufactured by NOF CORPORATION) one-minute half-life temperature: 154°C

<Filler (C)>

Calcium carbonate fine particles (C-1) (ESCALON #200 manufactured by Sankyo Seifun Co., Ltd.)
Carbon black (C-2) (Printex 30 manufactured by Orion Engineered Carbons)

<Crosslinking aid (E)>

Methacryloyl-modified polyisoprene (E-1) produced in Production Example 9 described later
Ethylene glycol dimethacrylate (E-2)

<Oil>

Paraffinic oil (Wing 70 manufactured by Tudapetrol)

<Anti-aging agent>

Phenolic anti-aging agent (1) 2,2'-methylene bis(4-methyl-6-tert-butylphenol)

<Foaming agent (G)>

Foaming agent (G-1) azodicarbonamide
Foaming agent (G-2) 4,4'-oxybis(benzenesulfonic acid hydrazide)

<Other components>

Other polymer: styrene-butadiene copolymer (F-1) produced in Production Example 8 described later
Functional group-containing compound: maleic anhydride-modified polybutadiene (M-1) produced in Production Example 10 and maleic anhydride-modified polyisoprene (M-2) produced in Production Example 11, described later

<Production Examples>

Production Example 1: Production of polybutadiene (A-1)

In a pressure-resistant container which had been purged with nitrogen and dried, 400 g of cyclohexane as a solvent and 16.2 g of sec-butyllithium (10.5 mass% cyclohexane solution) as an initiator were charged, 0.7 g of N,N,N',N'-tetramethylethylenediamine as a polar compound was charged, and the temperature was raised to 50°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (A-1) having the physical properties shown in Table 1.

Production Example 2: Production of polybutadiene (A-2)

In a pressure-resistant container which had been purged with nitrogen and dried, 400 g of hexane as a solvent and 32 g of n-butyllithium (17 mass% hexane solution) as an initiator were charged, 5 g of N,N,N',N'-tetramethylethylenediamine as a polar compound was charged, and the temperature was raised to 50°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (A-2) having the physical properties shown in Table 1.

Production Example 3: Production of poly(β-farnesene) (A-3)

In a pressure-resistant container which had been purged with nitrogen and dried, 400 g of hexane as a solvent and 6.1 g of n-butyllithium (17 mass% hexane solution) as an initiator were charged, and the temperature was raised to 50°C, and then 400 g of β-farnesene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain poly(β-farnesene) (A-3) having the physical properties shown in Table 1.

Production Example 4: Production of poly(β-farnesene) (A-4)

In a pressure-resistant container which had been purged with nitrogen and dried, 400 g of hexane as a solvent and 2.5 g of n-butyllithium (17 mass% hexane solution) as an initiator were charged, and the temperature was raised to 50°C, and then 400 g of β-farnesene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain poly(β-farnesene) (A-4) having the physical properties shown in Table 1.

Production Example 5: Production of poly(β-farnesene) (A-5)

In a pressure-resistant container which had been purged with nitrogen and dried, 400 g of hexane as a solvent and 1.5 g of n-butyllithium (17 mass% hexane solution) as an initiator were charged, and the temperature was raised to 50°C, and then 400 g of β-farnesene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain poly(β-farnesene) (A-5) having the physical properties shown in Table 1.

Production Example 6: Production of butadiene-β-farnesene copolymer (A-6)

In a pressure-resistant container which had been purged with nitrogen and dried, 1140 g of cyclohexane as a solvent and 56.2 g of sec-butyllithium (10.5 mass% cyclohexane solution) as a polymerization initiator were charged, and the temperature was raised to 50°C, and then a mixed solution of 1080 g of β-farnesene and 720 g of butadiene prepared in advance was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain butadiene-β-farnesene copolymer (A-6) having the physical properties shown in Table 1.

Production Example 7: Production of butadiene-β-farnesene copolymer (A-7)

In a pressure-resistant container which had been purged with nitrogen and dried, 1790 g of cyclohexane as a solvent and 12.4 g of sec-butyllithium (10.5 mass% cyclohexane solution) as a polymerization initiator were charged, and the temperature was raised to 50°C, and then a mixed solution of 720 g of β-farnesene and 480 g of butadiene prepared in advance was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain a butadiene-β-farnesene copolymer (A-7) having the physical properties shown in Table 1.

Comparative Production Example 1: Production of polybutadiene (X-1)

In a pressure-resistant container which had been purged with nitrogen and dried, 400 g of hexane as a solvent and 11.2 g of n-butyllithium (17 mass% hexane solution) as an initiator were charged, and the temperature was raised to 50°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (X-1) having the physical properties shown in Table 1.

Comparative Production Example 2: Production of polybutadiene (X-2)

In a pressure-resistant container which had been purged with nitrogen and dried, 400 g of hexane as a solvent and 30.9 g of n-butyllithium (17 mass% hexane solution) as an initiator were charged, 4.7 g of tetrahydrofuran as a polar compound was charged, and the temperature was raised to 50°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (X-2) having the physical properties shown in Table 1.

Comparative Production Example 3: Production of polybutadiene (X-3)

In a pressure-resistant container which had been purged with nitrogen and dried, 400 g of hexane as a solvent and 48.4 g of n-butyllithium (17 mass% hexane solution) as an initiator were charged, 3.4 g of tetrahydrofuran as a polar compound was charged, and the temperature was raised to 70°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (X-3) having the physical properties shown in Table 1.

Comparative Production Example 4: Production of polybutadiene (X-4)

In a pressure-resistant container which had been purged with nitrogen and dried, 400 g of hexane as a solvent and 48.4 g of n-butyllithium (17 mass% hexane solution) as an initiator were charged, 5.4 g of N,N,N',N'-tetramethylethylenediamine as a polar compound was charged, and the temperature was raised to 50°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (X-4) having the physical properties shown in Table 1.

Comparative Production Example 5: Production of polybutadiene (X-5)

In a pressure-resistant container which had been purged with nitrogen and dried, 400 g of hexane as a solvent and 32.3 g of n-butyllithium (17 mass% hexane solution) as an initiator were charged, and the temperature was raised to 50°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (X-5) having the physical properties shown in Table 1.

Comparative Production Example 6: Production of polyisoprene (X-6)

In a pressure-resistant container which had been purged with nitrogen and dried, 400 g of hexane as a solvent and 8.2 g of n-butyllithium (17 mass% hexane solution) as an initiator were charged, and the temperature was raised to 50°C, and then 400 g of isoprene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polyisoprene (X-6) having the physical properties shown in Table 1.

Comparative Production Example 7: Production of poly(β-farnesene) (X-7)

In a pressure-resistant container which had been purged with nitrogen and dried, 400 g of hexane as a solvent and 27.6 g of n-butyllithium (17 mass% hexane solution) as an initiator were charged, and the temperature was raised to 50°C, and then 400 g of β-farnesene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain poly(β-farnesene) (X-7) having the physical properties shown in Table 1.

Comparative Production Example 8: Production of polybutadiene (X-8)

In a pressure-resistant container which had been purged with nitrogen and dried, 400 g of hexane as a solvent and 6.6 g of n-butyllithium (17 mass% hexane solution) as an initiator were charged, and the temperature was raised to 50°C, and then 400 g of butadiene was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain polybutadiene (X-8) having the physical properties shown in Table 1.

Production Example 8: Production of styrene-butadiene copolymer (F-1)

In a pressure-resistant container which had been purged with nitrogen and dried, 1520 g of cyclohexane as a solvent and 20.0 g of sec-butyllithium (10.5 mass% cyclohexane solution) as a polymerization initiator were charged, 10.3 g of tetramethylethylenediamine as a polar compound was charged, and the temperature was raised to 50°C, and then a mixed solution of 319 g of styrene and 1200 g of butadiene prepared in advance was added thereto for polymerization for 1 hour. The resulting polymerization reaction solution was treated with methanol, and the polymerization reaction solution was washed with water. The polymerization reaction solution after washing was separated from water, and dried at 70°C for 12 hours to obtain a styrene-butadiene copolymer (F-1) having the physical properties shown in Table 2-1.

Production Example 9: Production of methacryloyl-modified polyisoprene (E-1)

Isoprene was anionically polymerized in n-hexane using n-butyllithium as an initiator to obtain polyisoprene having a number average molecular weight of 36,000. 300 g of the resulting polyisoprene was charged into a nitrogen-substituted 1 liter autoclave, 4.5 g of maleic anhydride and 3.0 g of BHT (2,6-di-t-butyl-4-methylphenol manufactured by Honshu Chemical Industry Co., Ltd.) were added, and the mixture was reacted at 160°C for 20 hours to add maleic anhydride to the polyisoprene. Subsequently, 6.3 g of 2-hydroxyethyl methacrylate, 0.15 g of hydroquinone, and 0.9 g of N,N-dimethylbenzylamine were added, and the mixture was reacted at 80°C for 6 hours to obtain methacryloyl-modified polyisoprene (E-1) having 3 methacryloyl groups on average per molecule and having the physical properties shown in Table 2-2.

Production Example 10: Production of maleic anhydride-modified polybutadiene (M-1)

Butadiene was anionically polymerized in n-hexane using n-butyllithium as an initiator to obtain polybutadiene having a number average molecular weight of 9,000. 300 g of the resulting polybutadiene was charged into a nitrogen-substituted 1 liter autoclave, 39 g of maleic anhydride and 3.0 g of BHT (2,6-di-t-butyl-4-methylphenol manufactured by Honshu Chemical Industry Co., Ltd.) were added, and the mixture was reacted at 160°C for 20 hours to add maleic anhydride to the polybutadiene. A maleic anhydride-modified polybutadiene (M-1) having 8 maleic anhydride groups on average per molecule and having the physical properties shown in Table 2-2 was obtained.

Production Example 11: Production of maleic anhydride-modified polyisoprene (M-2)

Isoprene was anionically polymerized in n-hexane using n-butyllithium as an initiator to obtain polyisoprene having a number average molecular weight of 30,000. 300 g of the resulting polyisoprene was charged into a nitrogen-substituted 1 liter autoclave, 4.5 g of maleic anhydride and 3.0 g of BHT (2,6-di-t-butyl-4-methylphenol manufactured by Honshu Chemical Industry Co., Ltd.) were added, and the mixture was reacted at 160°C for 20 hours to add maleic anhydride to the polyisoprene. A maleic anhydride-modified polyisoprene (M-2) having 3 maleic anhydride groups on average per molecule and having the physical properties shown in Table 2-2 was obtained.

The number average molecular weight (Mn), the molecular weight distribution (Mw/Mn), the melt viscosity, and the vinyl content of the polymer obtained in, for example, the above Production Examples were determined by the following measurement methods. Measurement results are summarized in Table 1. Further, the number of moles of the double bond of the side chain of the polymer obtained in, for example, Production Examples was determined by these results and the above-described calculation method. These results are also summarized in Table 1.

(Method for measuring number average molecular weight and molecular weight distribution)

The Mn and the Mw/Mn of the polymer obtained in, for example, Production Examples were determined as molecular weight in terms of standard polystyrene by the gel permeation chromatography (GPC).

A measurement apparatus and measurement conditions are as follows.

- Apparatus: GPC apparatus "GPC8020" manufactured by Tosoh Corporation
- Separation column: "TSKgel G4000HXL" manufactured by Tosoh Corporation
- Detector: "RI-8020" manufactured by Tosoh Corporation
- Eluent: tetrahydrofuran
- Eluent flow rate: 1.0 ml/min
- Sample concentration: 5 mg/10 ml
- Column temperature: 40°C

(Method for measuring melt viscosity)

The melt viscosity at 38°C of the polymer obtained in, for example, Production Examples was measured with a Brookfield viscometer (manufactured by BROOKFIELD ENGINEERING LABS. INC.).

(Method for measuring vinyl content)

A solution in which 50 mg of the polymer obtained in, for example, Production Examples was dissolved in 1 ml of deuterated chloroform ($CDCl_3$) was measured at a cumulative number of 512 using 400 MHz $^1$H-NMR. From a chart obtained by the measurement, the vinyl content of each conjugated diene unit was determined according to the following

method.

(1) Vinyl content of butadiene unit contained in polymer obtained in, for example, Production Examples

On the basis of an integral value of each of the following portions of the chart obtained by the above measurement, mole% of 1,2-bonded butadiene unit and mole% of a vinylcyclopentane unit (a structural unit represented by formula (1)) were determined according to the following method. The sum of the mol% of the 1,2-bonded butadiene unit and the mol% of the vinylcyclopentane unit was taken as the vinyl content.

[Chemical formula 1]

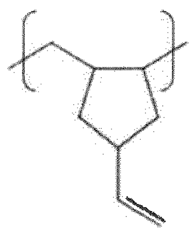

(1)

4.65 to 5.22 ppm portion: portion A (synthesis spectrum derived from 1,2-bonded butadiene unit and structural unit represented by formula (1))
5.22 to 5.68 ppm portion: portion B (synthesis spectrum of 1,2-bonded butadiene unit and 1,4-bonded butadiene unit)
5.68 to 5.95 ppm portion: portion C (spectrum derived from vinylcyclopentane unit)

mol% of 1,2-bonded butadiene unit = [(integral value of portion A - integral value of portion B×2)/2]/[(integral value of portion A - integral value of portion C×2)/2 + [integral value of portion C - (integral value of portion A - integral value of portion C×2)/2]/2 + integral value of portion C]×100

mole% of vinylcyclopentane unit = integral value of portion C/{(integral value of portion A - integral value of portion C×2)/2 + [integral value of portion C - (integral value of portion A - integral value of portion C×2)/2]/2 + integral value of portion C} × 100

{Vinyl content (butadiene unit)} = mol% of 1,2-bonded butadiene unit + mol% of vinylcyclopentane unit

(2) Vinyl content of isoprene unit contained in polymer obtained in, for example, Production Examples

The vinyl content was determined according to the following method on the basis of the integral value of each of the following portions of the chart obtained by the above measurement.

4.52 to 4.79 ppm portion: portion A' (synthesis spectrum of 3,4-bonded isoprene unit)
5.60 to 6.00 ppm portion: portion B' (synthesis spectrum of 1,2-bonded isoprene unit)
4.79 to 5.55 ppm portion: portion C' (synthesis spectrum of 1,4-bonded isoprene unit)

{Vinyl content (isoprene unit)} = {(integral value of portion A'/2) + (integral value of portion B')}/{(integral value of portion A'/2) + integral value of portion B' + integral value of portion C'}

(3) Vinyl content of β-farnesene unit contained in polymer obtained in, for example, Production Examples

The vinyl content was determined according to the following method on the basis of the integral value of each of the following portions of the chart obtained by the above measurement.

4.94 to 5.22 ppm portion: portion A" (synthesis spectrum of 1,2-bonded β-farnesene unit and 3,13-bonded β-farnesene unit)
4.45 to 4.85 ppm portion: portion B" (synthesis spectrum of 1,2-bonded β-farnesene unit, 3,13-bonded β-farnesene unit, and 1,13-bonded β-farnesene unit)

{Vinyl content (β-farnesene unit)} = (integral value of portion A"/2)/[(integral value of portion A"/2) + {(integral value of portion B" - integral value of portion A")/3}]

Note that the vinyl content of the butadiene-β-farnesene copolymer is determined by calculating the vinyl content of each of the butadiene unit and the β-farnesene unit contained in the copolymer by the above method, and summing them.

(Glass transition temperature)

10 mg of a sample was placed in an aluminum open pan, an aluminum lid was placed thereon, and the pan was crimped with a sample sealer. After cooling with a differential scanning calorimeter (DSC) under the following conditions, a thermogram was measured under a temperature rising rate condition of 10°C/min, and a value of a peak top of DSC was taken as the glass transition temperature (Tg). The measurement apparatus and measurement conditions are as follows.

[Measurement apparatus and measurement conditions]

- Apparatus: Differential scanning calorimeter "DSC 6200" manufactured by Seiko Instruments Inc.
- Cooling apparatus: Cooling controller manufactured by Seiko Instruments Inc.
- Detector: heat flow rate type
- Sample weight: 10 mg
- Cooling conditions: cooling to -130°C at a rate of 10°C/min (thereafter, isothermal holding at -130°C for 3 minutes)
- Temperature increase condition: temperature increase from -130°C at 10°C/min
- Reference container: aluminum
- Reference weight: 0 mg

[Table 1]

| | Polymer | Number of moles of side chain double bonds per mole of polymer | Vinyl content (mol%) | Number average molecular weight |
|---|---|---|---|---|
| Production Example 1 | Polybutadiene A-1 | 354 | 66 | 29,000 |
| Production Example 2 | Polybutadiene A-2 | 125 | 75 | 9,000 |
| Production Example 3 | Poly(β-farnesene) A-3 | 274 | 7 | 27,000 |
| Production Example 4 | Poly(β-farnesene) A-4 | 680 | 7 | 67,000 |
| Production Example 5 | Poly(β-farnesene) A-5 | 1157 | 7 | 114,000 |
| Production Example 6 | Butadiene-β-farnesene copolymer A-6 | 192 | 17 | 28,000 |
| Production Example 7 | Butadiene-β-farnesene copolymer A-7 | 612 | 16 | 93,000 |
| Comparative Production Example 1 | Polybutadiene X-1 | 48 | 10 | 26,000 |
| Comparative Production Example 2 | Polybutadiene X-2 | 96 | 55 | 9,400 |
| Comparative Production Example 3 | Polybutadiene X-3 | 50 | 45 | 6,000 |
| Comparative Production Example 4 | Polybutadiene X-4 | 96 | 86 | 6,000 |
| Comparative Production Example 5 | Polybutadiene X-5 | 17 | 10 | 9,000 |
| Comparative Production Example 6 | Polyisoprene X-6 | 29 | 7 | 28,000 |
| Comparative Production Example 7 | Poly(β-farnesene) X-7 | 61 | 7 | 6,000 |
| Comparative Production Example 8 | Polybutadiene X-8 | 81 | 10 | 44,000 |

Table 1 (continued)

| | Molecular weight distribution Mw/Mn | Melt viscosity at 38°C (Pa·s) | Glass transition temperature (°C) |
|---|---|---|---|
| Production Example 1 | 1.02 | 363 | -42 |
| Production Example 2 | 1.23 | 183 | -24 |
| Production Example 3 | 1.05 | 4 | -73 |
| Production Example 4 | 1.08 | 19 | -70 |
| Production Example 5 | 1.19 | 69 | -70 |
| Production Example 6 | 1.03 | 12 | -79 |
| Production Example 7 | 1.05 | 603 | -78 |
| Comparative Production Example 1 | 1.03 | 40 | -94 |
| Comparative Production Example 2 | 1.02 | 6 | -60 |
| Comparative Production Example 3 | 1.96 | 4 | -69 |
| Comparative Production Example 4 | 1.24 | 50 | -21 |
| Comparative Production Example 5 | 1.06 | 2 | -94 |
| Comparative Production Example 6 | 1.14 | 74 | -63 |
| Comparative Production Example 7 | 1.05 | 0.6 | -73 |
| Comparative Production Example 8 | 1.02 | 200 | -93 |

[Table 2-1]

| | Polymer | Number of moles of side chain double bonds per mole of polymer | Vinyl content (mol%) | Number average molecular weight |
|---|---|---|---|---|
| Production Example 8 | Styrene-butadiene copolymer F-1 | 79 | 65 | 8,300 |

Table 2-1 (continued)

| | Molecular weight distribution Mw/Mn | Melt viscosity at 38°C (Pa·s) | Glass transition temperature (°C) |
|---|---|---|---|
| Production Example 8 | 1.01 | 282 | -14 |

[Table 2-2]

| | Polymer | Number average molecular weight | Number of polymerizable functional groups Number/(molecule of polymer) |
|---|---|---|---|
| Production Example 9 | Methacryloyl-modified polyisoprene E-1 | 36,000 | 3 |
| Production Example 10 | Maleic anhydride-modified polybutadiene M-1 | 9,000 | a |
| Production Example 11 | Maleic anhydride-modified polyisoprene M-2 | 30,000 | 3 |

(Examples 1 to 14 and Comparative Examples 1 to 12)

According to blending ratios (parts by mass) shown in Tables 3 to 5, the conjugated diene-based polymer, the crosslinking agent (B), and other components (the filler (C), the crosslinking aid (E), the oil, and the functional group-containing compound) to be added as necessary shown in each table were put into a container set at a temperature of 60°C, and stirred at 100 rpm for 3 minutes using a three-one motor to obtain 50 g of a curable composition.

Using the curable compositions obtained in Examples 1 to 8, and 11 to 14 and Comparative Examples 1 to 8, and 12, the curing rate was measured by the following method. Note that, in Examples 1 to 8 and Comparative Examples 1 to 8, the curing rate was measured by a method described in the following curing rate (1), and in Examples 11 to 14 and Comparative Examples 11 and 12, the curing rate was measured by a method described in the following curing rate (2).

Further, for Examples 9 and 10 and Comparative Examples 9 and 10, the hardness, the shear adhesive strength, and a tensile breaking strength of the cured products obtained from the curable compositions were measured by the following methods.

(Method for measuring curing rate (1))

The curing rate of the curable composition was measured using a dynamic viscoelasticity measuring apparatus ARES G2 manufactured by TA Instruments.

The curable composition was placed in a cup having a plate diameter of 40 mm so as to have a thickness of 1 mm. For an upper part, a parallel plate having a diameter of 40 mm was used, the temperature was raised from a

measurement temperature of 25°C to 165°C at 10 °C/min, after reaching 165°C, the temperature was maintained for 60 minutes, and the viscoelasticity was measured while curing the curable composition.

Measurement conditions: The measurement was started at a frequency of 1 Hz and a distortion initial setting value of 5%, and the distortion was automatically adjusted in a range of 0.05% to 50% according to a detected torque.

After the measurement is started, G' (storage elastic modulus) increases with curing, and the G' shows a maximum value. A time when 90% of the maximum value G' was reached was taken as a curing time (T90).

The shorter the curing time (T90), the better the curability and the higher the curing rate.

(Method for measuring curing rate (2))

The curing rate of the curable composition was measured using a dynamic viscoelasticity measuring apparatus ARES G2 manufactured by TA Instruments.

The curable composition was placed in a cup having a plate diameter of 40 mm so as to have a thickness of 1 mm. For an upper part, a parallel plate having a diameter of 40 mm was used, the temperature was raised from a measurement temperature of 25°C to 140°C at 10 °C/min, after reaching 140°C, the temperature was maintained for 60 minutes, and the viscoelasticity was measured while curing the curable composition.

Measurement conditions: The measurement was started at a frequency of 1 Hz and a distortion initial setting value of 5%, and the distortion was automatically adjusted in a range of 0.05% to 50% according to a detected torque.

After the measurement is started, G' (storage elastic modulus) increases with curing, and the G' shows a maximum value. A time when 80% of the maximum value G' was reached was taken as a curing time (T80). The shorter the curing time (T80), the better the curability and the higher the curing rate.

(Method for measuring hardness (1))

Shore A hardness was measured according to ISO 7619-1:2010. The curable composition was placed in a mold so that the cured product to be obtained had a thickness of about 10 mm, and heated at 150°C for 25 minutes to produce a test piece having a thickness of about 10 mm. The hardness of the cured product was measured at room temperature using the resulting test piece.

(Method for measuring shear adhesive strength)

The shear adhesive strength was measured according to DIN EN 1465:2009. The curable composition was applied to the following metal plate so as to have a thickness of 0.2 mm, and then crosslinked at 150°C for 25 minutes to produce a sample. Using the resulting sample, the shear adhesive strength was measured under the condition of a tensile speed of 5 mm/min. The larger the numerical value, the better the shear adhesive strength.
Metal plate: aluminum 6016, aluminum 7020, and electrodeposition-coated steel (size: 1.25 mm×100 mm×12.5 mm)

(Method for measuring tensile breaking strength)

The curable composition was placed in a mold so that the cured product to be obtained had a thickness of about 2 mm, and heated at 150°C for 25 minutes to produce a sheet having a thickness of about 2 mm. A dumbbell-shaped test piece was punched out from the sheet in accordance with a dumbbell-shaped No. 3 form of JIS K 6251:2017, and a tensile breaking strength (MPa) was measured in accordance with JIS K 6251:2017 using a tensile testing machine manufactured by Instron Corporation. The larger the numerical value, the better the breaking characteristics.

[Table 3]

| | | | Example 1 | Example 2 | Example 3 | Example 4 |
|---|---|---|---|---|---|---|
| Blending (parts by mass) | Production Example 1 | A-1 | 100 | | | |
| | Production Example 2 | A-2 | | 100 | | |
| | Production Example 3 | A-3 | | | 100 | |
| | Production Example 4 | A-4 | | | | 100 |
| | Production Example 5 | A-5 | | | | |
| | Production Example 6 | A-6 | | | | |
| | Production Example 7 | A-7 | | | | |
| | Comparative Production Example 1 | X-1 | | | | |
| | Comparative Production Example 2 | X-2 | | | | |
| | Comparative Production Example 3 | X-3 | | | | |
| | Comparative Production Example 4 | X-4 | | | | |
| | Comparative Production Example 5 | X-5 | | | | |
| | Comparative Production Example 6 | X-6 | | | | |
| | Comparative Production Example 7 | X-7 | | | | |
| | Comparative Production Example 8 | X-8 | | | | |
| | Crosslinking agent (B) | Organic peroxide (1) Dicumyl peroxide | 1 | 1 | 1 | 1 |
| | Crosslinking aid (E) | E-1 | | | | |
| Polymer structure | | Degree of polymerization | 537 | 167 | 132 | 328 |
| | | Vinyl content (mol%) | 66 | 75 | 7 | 7 |
| | | Number of moles of side chain double bonds per mole of polymer | 354 | 125 | 274 | 680 |
| Evaluation (Curing rate (1)) | | Curing time (T90) (min) | 31 | 41 | 38 | 35 |

Table 3 (continued)

| | | | Example 5 | Example 6 | Example 7 | Example 8 |
|---|---|---|---|---|---|---|
| Blending (parts by mass) | Production Example 1 | A-1 | | | | 100 |
| | Production Example 2 | A-2 | | | | |
| | Production Example 3 | A-3 | | | | |
| | Production Example 4 | A-4 | | | | |
| | Production Example 5 | A-5 | 100 | | | |
| | Production Example 6 | A-6 | | 100 | | |
| | Production Example 7 | A-7 | | | 100 | |
| | Comparative Production Example 1 | X-1 | | | | |
| | Comparative Production Example 2 | X-2 | | | | |
| | Comparative Production Example 3 | X-3 | | | | |
| | Comparative Production Example 4 | X-4 | | | | |
| | Comparative Production Example 5 | X-5 | | | | |
| | Comparative Production Example 6 | X-6 | | | | |
| | Comparative Production Example 7 | X-7 | | | | |
| | Comparative Production Example 8 | X-8 | | | | |
| | Crosslinking agent (B) | Organic peroxide (1) Dicumyl peroxide | 1 | 1 | 1 | 1 |
| | Crosslinking aid (E) | E-1 | | | | 1 |
| Polymer structure | | Degree of polymerization | 559 | 290 | 962 | 537 |
| | | Vinyl content (mol%) | 7 | 17 | 16 | 66 |
| | | Number of moles of side chain double bonds per mole of polymer | 1157 | 192 | 612 | 354 |
| Evaluation (Curing rate (1)) | | Curing time (T90) (min) | 29 | 39 | 30 | 29 |

Table 3 (continued)

| | | | Comparative Example 1 | Comparative Example 2 | Comparative Example 3 | Comparative Example 4 |
|---|---|---|---|---|---|---|
| Blending (parts by mass) | Production Example 1 | A-1 | | | | |
| | Production Example 2 | A-2 | | | | |
| | Production Example 3 | A-3 | | | | |
| | Production Example 4 | A-4 | | | | |
| | Production Example 5 | A-5 | | | | |
| | Production Example 6 | A-6 | | | | |
| | Production Example 7 | A-7 | | | | |
| | Comparative Production Example 1 | X-1 | 100 | | | |
| | Comparative Production Example 2 | X-2 | | 100 | | |
| | Comparative Production Example 3 | X-3 | | | 100 | |
| | Comparative Production Example 4 | X-4 | | | | 100 |
| | Comparative Production Example 5 | X-5 | | | | |
| | Comparative Production Example 6 | X-6 | | | | |
| | Comparative Production Example 7 | X-7 | | | | |
| | Comparative Production Example 8 | X-8 | | | | |
| | Crosslinking agent (B) | Organic peroxide (1) Dicumyl peroxide | 1 | 1 | 1 | 1 |
| | Crosslinking aid (E) | E-1 | | | | |
| Polymer structure | | Degree of polymerization | 481 | 174 | 111 | 111 |
| | | Vinyl content (mol%) | 10 | 55 | 45 | 86 |
| | | Number of moles of side chain double bonds per mole of polymer | 48 | 96 | 50 | 96 |
| Evaluation (Curing rate (1)) | | Curing time (T90) (min) | 45 | 55 | 90 | 58 |

Table 3 (continued)

| | | | Comparative Example 5 | Comparative Example 6 | Comparative Example 7 | Comparative Example 8 |
|---|---|---|---|---|---|---|
| Blending (parts by mass) | Production Example 1 | A-1 | | | | |
| | Production Example 2 | A-2 | | | | |
| | Production Example 3 | A-3 | | | | |
| | Production Example 4 | A-4 | | | | |
| | Production Example 5 | A-5 | | | | |
| | Production Example 6 | A-6 | | | | |
| | Production Example 7 | A-7 | | | | |
| | Comparative Production Example 1 | X-1 | | | | |
| | Comparative Production Example 2 | X-2 | | | | |
| | Comparative Production Example 3 | X-3 | | | | |
| | Comparative Production Example 4 | X-4 | | | | |
| | Comparative Production Example 5 | X-5 | 100 | | | |
| | Comparative Production Example 6 | X-6 | | 100 | | |
| | Comparative Production Example 7 | X-7 | | | 100 | |
| | Comparative Production Example 8 | X-8 | | | | 100 |
| | Crosslinking agent (B) | Organic peroxide (1) Dicumyl peroxide | 1 | 1 | 1 | 1 |
| | Crosslinking aid (E) | E-1 | | | | |
| Polymer structure | | Degree of polymerization | 167 | 412 | 29 | 815 |
| | | Vinyl content (mol%) | 10 | 7 | 7 | 10 |
| | | Number of moles of side chain double bonds per mole of polymer | 17 | 29 | 61 | 81 |
| Evaluation (Curing rate (1)) | | Curing time (T90) (min) | Uncured | 47 | 60 | 43 |

[Table 4]

| | | | Example 9 | Example 10 | Comparative Example 9 | Reference Example 1 |
|---|---|---|---|---|---|---|
| Blending (parts by mass) | Production Example 1 | A-1 | 30 | 30 | | 30 |
| | Comparative Production Example 8 | X-8 | | | 30 | |
| | Crosslinking agent (B) | Organic peroxide (2) t-butyl peroxybenzoate | 1.5 | 1.5 | 1.5 | 1.5 |
| | Filler (C) | Calcium carbonate fine particle (C-1) | 52.5 | 48.5 | 52.5 | 48.5 |
| | Filler (C) | Carbon black (C-2) | 3 | 3 | 3 | 3 |
| | Functional group-containing compound | Maleic anhydride-modified polybutadiene M-1 | 8 | 8 | 8 | 12 |
| | Functional group-containing compound | Maleic anhydride-modified polyisoprene M-2 | | 4 | | |
| | Oil | Paraffinic oil Wing 70 | 3 | 3 | 3 | 3 |
| | Crosslinking aid (E) | Ethylene glycol dimethacrylate (E-2) | 2 | 2 | 2 | 2 |
| Physical property evaluation | Hardness (1) | | 78 | 74 | 78 | 78 |
| | Shear adhesive strength Aluminum 6016 (MPa) | | 3.3 | 3.3 | 3.1 | 2.2 |
| | Shear adhesive strength Aluminum 7020 (MPa) | | 3.2 | 2.8 | 2.8 | 1.9 |
| | Shear adhesive strength Electrodeposition-coated steel (MPa) | | 2.0 | 1.6 | 1.5 | 1.5 |
| | Tensile breaking strength (MPa) | | 3.4 | 3.2 | 3.2 | 2.8 |

[Table 5]

| | | | Example 11 | Example 12 | Example 13 | Example 14 | Comparative Example 11 | Comparative Example 12 |
|---|---|---|---|---|---|---|---|---|
| Blending (parts by mass) | Production Example 1 | A-1 | 100 | | | | | |
| | Production Example 2 | A-2 | | 100 | | | | |
| | Production Example 5 | A-5 | | | 100 | | | |
| | Production Example 7 | A-7 | | | | 100 | | |
| | Comparative Production Example 1 | X-1 | | | | | 100 | |
| | Comparative Production Example 6 | X-6 | | | | | | 100 |
| | Crosslinking agent (B) | Organic peroxide (3) | 1 | 1 | 1 | 1 | 1 | 1 |
| Polymer structure | | Degree of polymerization | 537 | 167 | 559 | 962 | 481 | 412 |
| | | Vinyl content (mol%) | 66 | 75 | 7 | 16 | 10 | 7 |
| | | Number of moles of side chain double bonds per mole of polymer | 354 | 125 | 1157 | 612 | 48 | 29 |
| Evaluation (Curing rate (2)) | | Curing time (T80) (min) | 43 | 53 | 35 | 48 | 58 | 56 |
| Organic peroxide (3): 1,1-bis(1,1-dimethylethylperoxy)cyclohexane | | | | | | | | |

Comparison of Examples 1 to 7 with Comparative Examples 1 to 7 shows that the curable compositions of Examples 1 to 7 having 100 moles or more of side chain double bonds per mole of the polymer cures in a shorter time than the curable compositions of Comparative Examples 1 to 7.

Example 1 and Comparative Example 1 are polybutadienes having almost the same degree of polymerization. When compared in a case where degrees of polymerization are substantially equal, Example 1 in which the number of side chain double bonds per mole of the polymer is 100 moles or more cures in a shorter time than Comparative Example 1 in which the number of side chain double bonds is less than 100 moles.

Example 1 and Comparative Example 2 are polybutadienes having substantially equal vinyl contents. When compared in a case where the vinyl contents are substantially equal, Example 1 in which the number of side chain double bonds per mole of the polymer is 100 moles or more cures in a shorter time than Comparative Example 2 in which the number of side chain double bonds is less than 100 moles.

Comparing Example 1 with Comparative Example 3, the polybutadiene used in Example 1 has a larger degree of polymerization and a larger vinyl content than those of the polybutadiene used in Comparative Example 3. Then, Example 1 in which the number of side chain double bonds per mole of the polymer is 100 moles or more cures in a shorter time than Comparative Example 3 in which the number of side chain double bonds is less than 100 moles.

Both Example 2 and Comparative Example 4 are polybutadiene having a high vinyl content. Even when compared in a case where the polybutadiene has a high vinyl content, Example 2 in which the number of side chain double bonds per mole of the polymer is 100 moles or more cures in a shorter time than Comparative Example 4 in which the number of side chain double bonds is less than 100 moles.

Comparing Examples 3 to 5 with Comparative Examples 1 to 6, the β-farnesene unit has 3 double bonds in the side chain per monomer unit if a bond mode thereof is a vinyl bond, and thus cures in a shorter time than the butadiene unit and the isoprene unit. Further, as the degree of polymerization increases, the curing takes a shorter time.

Examples 3 to 5 and Comparative Example 7 are both poly(β-farnesene) having the same β-farnesene unit. Even comparing poly(β-farnesene) with each other, Examples 3 to 5 in which the number of side chain double bonds per mole of the polymer is 100 moles or more cure more quickly than Comparative Example 7 in which the number of side chain double bonds is less than 100 moles.

Both Examples 6 and 7 are a copolymer of butadiene and β-farnesene. Also in the case of such a copolymer, Examples 6 and 7 in which the number of side chain double bonds per mole of the polymer is 100 moles or more cure more quickly than Comparative Examples 1 to 6 in which the number of side chain double bonds is less than 100 moles. Further, the copolymer tends to cure in a shorter time than a polymer containing only a butadiene unit or an isoprene unit. Furthermore, in the case of such a copolymer, the degree of shortening of the curing time tends to increase as the degree of polymerization increases.

Comparing Example 1 using polybutadiene (A-1) with Comparative Example 8 using polybutadiene (X-8), the curable composition of Example 1 having 100 moles or more of side chain double bonds per mole of the polymer cures in a shorter time than the curable composition of Comparative Example 8. Further, Example 9 using polybutadiene (A-1) is superior to Comparative Example 9 using polybutadiene (X-8) in the shear adhesive strength and the tensile breaking strength.

Comparison of Examples 11 to 14 with Comparative Examples 11 and 12 shows that the curable compositions of Examples 11 to 14 having 100 moles or more of side chain double bonds per mole of the polymer cure in a shorter time than the curable compositions of Comparative Examples 11 and 12.

(Examples 15 to 20 and Comparative Examples 13 and 14)

According to the blending ratios (parts by mass) shown in Table 6, the conjugated diene-based polymer, the crosslinking agent (B), the filler (C), the anti-aging agent, and another component (another polymer (F)) to be added as necessary shown in Table 6 were stirred at 100 rpm for 3 minutes using a plasticoder manufactured by Brabender set at 50°C to obtain a curable composition.

Using the resulting curable compositions, dynamic viscoelasticity and the curing rate were measured by the following methods.

(Method for measuring dynamic viscoelasticity)

The curable composition was placed in a mold so that the cured product to be obtained had a thickness of about 2 mm, and heated at 150°C for 25 minutes to produce a sheet having a thickness of about 2 mm. The sheet was cut into a size of 5 mm×20 mm to obtain a test piece. For tan δ, the storage elastic modulus (E') and a loss modulus (E") at - 150°C to 60°C were measured in a stress-strain mixture control mode of a tensile mode, a temperature rising rate of 3 °C/min, PF (static load/dynamic load) = 1.300, a target amplitude absolute value of 30 μm, and a maximum dynamic load of 2.182 N using a dynamic viscoelasticity measuring apparatus (DMA 242E Artemis manufactured by

NETZSCH Japan K.K.), and tan δ (E"/E') was calculated from the storage elastic modulus (E') and the loss modulus (E"). Data measured at 10 Hz in a temperature rising process was used.

(Method for measuring curing rate (3))

The curing rate of the curable composition was measured using a dynamic viscoelasticity measuring apparatus ARES G2 manufactured by TA Instruments.

The curable composition was placed in a cup having a plate diameter of 40 mm so as to have a thickness of 1 mm. For an upper part, a parallel plate having a diameter of 40 mm was used, the temperature was raised from a measurement temperature of 25°C to 165°C at 10 °C/min, after reaching 165°C, the temperature was maintained for 60 minutes, and the viscoelasticity was measured while curing the curable composition.

Measurement conditions: The measurement was started at a frequency of 1 Hz and a distortion initial setting value of 5%, and the distortion was automatically adjusted in a range of 0.05% to 50% according to a detected torque.

After the measurement is started, G' (storage elastic modulus) increases with curing, and the G' shows a maximum value. A time when 90% of the maximum value G' was reached was taken as a curing time (T90). The shorter the curing time (T90), the better the curability and the higher the curing rate.

[Table 6]

| | | | Example 15 | Example 16 | Example 17 | Example 18 | Example 19 | Example 20 |
|---|---|---|---|---|---|---|---|---|
| Blending (parts by mass) | Production Example 1 | A-1 | 100 | | | | | |
| | Production Example 2 | A-2 | | | | | | 50 |
| | Production Example 5 | A-5 | | 100 | | 50 | | 50 |
| | Production Example 7 | A-7 | | | 100 | | 50 | |
| | Comparative Production Example 1 | X-1 | | | | | | |
| | Comparative Production Example 6 | X-6 | | | | | | |
| | Crosslinking agent (B) | Organic peroxide (1) | 3 | 3 | 3 | 3 | 3 | 3 |
| | Filler (C) | Calcium carbonate fine particle (C-1) | 85 | 85 | 85 | 85 | 85 | 85 |
| | Production Example 8 | F-1 | | | | 50 | 50 | |
| | Anti-aging agent | Phenolic anti-aging agent (1) | 2 | 2 | 2 | 2 | 2 | 2 |
| Physical property evaluation | Storage elastic modulus at -30°C E'(MPa) | | 115 | 4 | 6 | 21 | 18 | 42 |
| | Peak top temperature of loss factor (°C) | | -29 | -68 | -80 | -31 | -34 | -25 |
| | Curing rate (3) | Curing time (T90) | - | 28 | - | 30 | - | - |

Phenolic anti-aging agent (1): 2,2'-methylene bis(4-methyl-6-tert-butylphenol)

Table 6 (continued)

| | | | Comparative Example 13 | Comparative Example 14 | Reference Example 2 |
|---|---|---|---|---|---|
| Blending (parts by mass) | Production Example 1 | A-1 | | | |
| | Production Example 2 | A-2 | | | 50 |
| | Production Example 5 | A-5 | | | |
| | Production Example 7 | A-7 | | | |
| | Comparative Production Example 1 | X-1 | 100 | | |
| | Comparative Production Example 6 | X-6 | | 100 | |
| | Crosslinking agent (B) | Organic peroxide (1) | 3 | 3 | 3 |
| | Filler (C) | Calcium carbonate fine particle (C-1) | 85 | 85 | 85 |
| | Production Example 8 | F-1 | | | 50 |
| | Anti-aging agent | Phenolic anti-aging agent (1) | 2 | 2 | 2 |
| Physical property evaluation | Storage elastic modulus at -30°C E'(MPa) | | 7 | 8 | 2137 |
| | Peak top temperature of loss factor (°C) | | -105 | -71 | 13 |
| | Curing rate (3) | Curing time (T90) | 35 | 33 | - |

Phenolic anti-aging agent (1): 2,2'-methylene bis(4-methyl-6-tert-butylphenol)

Examples 15 to 17 are excellent in the low-temperature characteristics and the impact resistance because the conjugated diene-based polymer (A) has a Tg of -30°C or lower and the E' is 150MPa or less at -30°C. Examples 16 and 18 are curable compositions that can be cured in a shorter time than Comparative Examples 13 and 14. Especially, as shown in Table 6, Fig. 1, and Fig. 2, the Tg of the conjugated diene-based polymer (A) used in Examples 15 to 17 is -30°C or lower, and the storage elastic modulus at -30°C of the cured product obtained from the curable composition of these Examples also tends to be low (for example, 150MPa or less). From these facts, among the curable compositions of the present invention, the cured product obtained from the curable composition containing the conjugated diene-based polymer (A) having a Tg of -30°C or lower tends to be excellent not only in the curing rate but also in the low-temperature characteristics and the impact resistance. In particular, it is found that in Examples 16 and 17 containing a β-farnesene unit, the storage elastic modulus of the cured product at -30°C is comparable or tends to decrease even when compared with Comparative Examples 13 and 14, and the low-temperature characteristics and the impact resistance are comparable or tends to improve even when compared with the conventional curable composition.

The Tg of the conjugated diene-based polymer (A) used in Example 15 to 17 is -30°C or lower, and the peak top temperature of the loss factor (tan δ) of the cured product obtained from the curable composition of these Examples is also -20°C or lower. From these facts, among the curable compositions of the present invention, the cured product obtained from the curable composition containing the conjugated diene-based polymer (A) having a Tg of -30°C or lower tends to be excellent not only in the curing rate but also in vibration damping properties at low temperatures.

Further, as shown in Example 18 to 20, by combining the conjugated diene-based polymer (A) with another polymer (F) component or combining the conjugated diene-based polymer (A) having a Tg of -30°C or lower and the conjugated diene-based polymer (A) having a Tg of higher than -30°C, the loss factor of 0.5 or more is maintained in a wide temperature range from -50°C to 60°C, and excellent vibration damping properties (acoustic damping properties) can be exhibited in a wide temperature range.

(Examples 21 to 24 and Comparative Examples 15 and 16)

According to the blending ratios (parts by mass) shown in Tables 7 and 8, the conjugated diene-based polymer, the crosslinking agents (B), the filler (C), the foaming agent (G), and the anti-aging agent shown in Table 7 or 8 were stirred at 100 rpm for 3 minutes using a plasticoder manufactured by Brabender set at 50°C to obtain a curable composition.
Using the resulting curable compositions, the dynamic viscoelasticity and the curing rate were measured by the following methods. Note that, in Examples 21 and 22 and Comparative Example 15, evaluation was performed by methods described in the following measurement methods of curing rate (4), foamability (1), and hardness (2), and in Examples 23 and 24 and Comparative Example 16, the evaluation was performed by methods described in the following measurement methods of curing speed (5), foamability (2), and hardness (3) .

(Method for measuring curing rate (4))

The curing rate of the curable composition was measured using a dynamic viscoelasticity measuring apparatus ARES G2 manufactured by TA Instruments.
The curable composition was placed in a cup having a plate diameter of 40 mm so as to have a thickness of 1 mm. For an upper part, a parallel plate having a diameter of 40 mm was used, the temperature was raised from a measurement temperature of 25°C to 170°C at 10 °C/min, after reaching 170°C, the temperature was maintained for 60 minutes, and the viscoelasticity was measured while curing the curable composition.
Measurement conditions: The measurement was started at a frequency of 1 Hz and a distortion initial setting value of 5%, and the distortion was automatically adjusted in a range of 0.05% to 50% according to a detected torque.
After the measurement is started, G' (storage elastic modulus) increases with curing, and the G' shows a maximum value. A time when 90% of the maximum value G' was reached was taken as a curing time (T90).
The shorter the curing time (T90), the better the curability and the higher the curing rate.

(Method for measuring curing rate (5))

The curing rate of the curable composition was measured using a dynamic viscoelasticity measuring apparatus ARES G2 manufactured by TA Instruments.
The curable composition was placed in a cup having a plate diameter of 40 mm so as to have a thickness of 1 mm. For an upper part, a parallel plate having a diameter of 40 mm was used, the temperature was raised from a measurement temperature of 25°C to 160°C at 10 °C/min, after reaching 160°C, the temperature was maintained for 60 minutes, and the viscoelasticity was measured while curing the curable composition.
Measurement conditions: The measurement was started at a frequency of 1 Hz and a distortion initial setting value of 5%, and the distortion was automatically adjusted in a range of 0.05% to 50% according to a detected torque.
After the measurement is started, G' (storage elastic modulus) increases with curing, and the G' shows a maximum value. A time when 90% of the maximum value G' was reached was taken as a curing time (T90).
The shorter the curing time (T90), the better the curability and the higher the curing rate.

(Method for evaluating foamability (1))

The curable composition was placed in a mold so that the cured product to be obtained had a thickness of about 3 mm, and heated at 170°C for 30 minutes to produce a foam having a thickness of about 3 mm. The foam was sliced into a thickness of 0.5 mm, and a foam diameter of a cross section thereof was observed using a polarizing microscope (ECLIPSE E600 POL manufactured by Nikon Corporation). Diameters of five bubbles arbitrarily selected from the obtained three microscopic images were measured, and an average value thereof was evaluated as the foam diameter. The smaller the foam diameter, the better the fine foamability.

(Method for evaluating foamability (2))

The curable composition was placed in a mold so that the cured product to be obtained had a thickness of about 3 mm, and heated at 160°C for 30 minutes to produce a foam having a thickness of about 3 mm. The foam was sliced into a thickness of 0.5 mm, and a foam diameter of a cross section thereof was observed using a polarizing microscope (ECLIPSE E600 POL manufactured by Nikon Corporation). Diameters of five bubbles arbitrarily selected from the obtained three microscopic images were measured, and an average value thereof was evaluated as the foam diameter. The smaller the foam diameter, the better the fine foamability.

(Method for measuring hardness (2))

Asker C hardness was measured according to SRIS 0101-1968. The curable composition was placed in a mold so that the cured product to be obtained had a thickness of about 10 mm, and heated at 170°C for 30 minutes to produce a test piece having a thickness of about 10 mm. The hardness of the cured product was measured at room temperature using the resulting test piece.

(Method for measuring hardness (3))

Asker C hardness was measured according to SRIS 0101-1968. The curable composition was placed in a mold so that the cured product to be obtained had a thickness of about 10 mm, and heated at 160°C for 30 minutes to produce a test piece having a thickness of about 10 mm. The hardness of the cured product was measured at room temperature using the resulting test piece.

[Table 7]

| | | | Example 21 | Example 22 | Comparative Example 15 |
|---|---|---|---|---|---|
| Blending (parts by mass) | Production Example 5 | A-5 | 100 | | |
| | Production Example 7 | A-7 | | 100 | |
| | Comparative Production Example 1 | X-1 | | | 100 |
| | Crosslinking agent (B) | Organic peroxide (1) | 3 | 3 | 3 |
| | Filler (C) | Calcium carbonate fine particle (C-1) | 85 | 85 | 85 |
| | Foaming agent (G) | Foaming agent (G-1) Azodicarbonamide | 2 | 2 | 2 |
| | Anti-aging agent | Phenolic anti-aging agent (1) | 2 | 2 | 2 |
| Evaluation | Curing rate (4) | Curing time (T90) | 24 | 25 | 43 |
| | Foamability (1) | Foam diameter (μm) | 135 | 144 | 295 |
| | Hardness (2) | | 50 | 53 | 41 |

[Table 8]

| | | | Example 23 | Example 24 | Comparative Example 16 |
|---|---|---|---|---|---|
| Blending (parts by mass) | Production Example 5 | A-5 | 100 | | |
| | Production Example 7 | A-7 | | 100 | |
| | Comparative Production Example 1 | X-1 | | | 100 |
| | Crosslinking agent (B) | Organic peroxide (1) | 3 | 3 | 3 |
| | Filler (C) | Calcium carbonate fine particle (C-1) | 85 | 85 | 85 |
| | Foaming agent (G) | Foaming agent (G-2) | 2 | 2 | 2 |
| | Anti-aging agent | Phenolic anti-aging agent (1) | 2 | 2 | 2 |

(continued)

| | | | Example 23 | Example 24 | Comparative Example 16 |
|---|---|---|---|---|---|
| Evaluation | Curing rate (5) | Curing time (T90) | 35 | 37 | 44 |
| | Foamability (2) | Foam diameter (μm) | 162 | 173 | 478 |
| | Hardness (3) | | 37 | 43 | 31 |
| Foaming agent (G-2): 4,4'-oxybisbenzenesulfonylhydrazide | | | | | |

Examples 21 to 24 are curable compositions containing a conjugated diene-based polymer (A) having 100 moles or more of double bonds in the side chain, and can be cured in a short time, so that formation of crosslinking and decomposition of the foaming agent (G) proceed simultaneously, and a foam including fine bubbles can be obtained. Further, Examples 21 and 22 have higher hardness than Comparative Example 15, and Examples 23 and 24 have higher hardness than Comparative Example 16. This shows that the foam obtained from the curable composition containing the conjugated diene-based polymer (A) having 100 moles or more of double bonds in the side chain is excellent in the fine foamability and further excellent in elasticity.

Industrial Applicability

The curable composition containing the conjugated diene-based polymer (A) and the crosslinking agent (B) of the present invention is comparable to the curing rate by conventional sulfur while maintaining the performance required as the cured product. Therefore, it can also be suitably used for the sealant and is useful.

## Claims

1. A curable composition comprising a conjugated diene-based polymer (A) and a crosslinking agent (B), wherein the conjugated diene-based polymer (A) has 100 moles or more of double bonds in a side chain per mole of the polymer.

2. The curable composition according to claim 1, wherein the conjugated diene-based polymer (A) is a polymer containing at least one monomer unit selected from the group consisting of a β-farnesene unit and a butadiene unit.

3. The curable composition according to claim 1 or 2, wherein the conjugated diene-based polymer (A) has a number average molecular weight of 9,000 to 500,000.

4. The curable composition according to any one of claims 1 to 3, wherein the conjugated diene-based polymer (A) has a melt viscosity at 38°C of 0.1 to 3,000 Pa·s.

5. The curable composition according to any one of claims 1 to 4, wherein the crosslinking agent (B) is a peroxide.

6. The curable composition according to any one of claims 1 to 5, further comprising a filler (C).

7. The curable composition according to any one of claims 1 to 6, further comprising a foaming agent (G).

8. The curable composition according to any one of claims 1 to 7, further comprising a solid rubber (D).

9. The curable composition according to any one of claims 1 to 8, further comprising a crosslinking aid (E), wherein the crosslinking aid (E) contains a (meth)acryloyl group-modified conjugated diene-based polymer.

10. The curable composition according to any one of claims 1 to 9, further comprising another polymer (F).

11. A sealant comprising a cured product of the curable composition according to any one of claims 1 to 10.

Fig. 1

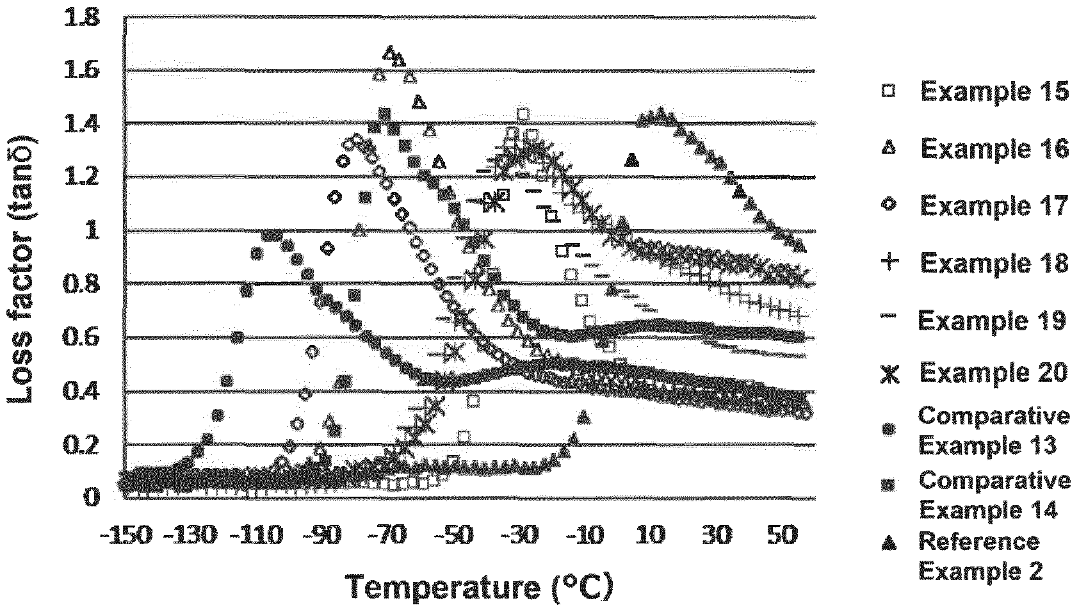
1.8
1.6
1.4
1.2
1
0.8
0.6
0.4
0.2
0
Loss factor (tanδ)
-150 -130 -110 -90 -70 -50 -30 -10 10 30 50
Temperature (°C)
Example 15
Example 16
Example 17
Example 18
Example 19
Example 20
Comparative Example 13
Comparative Example 14
Reference Example 2

Fig. 2

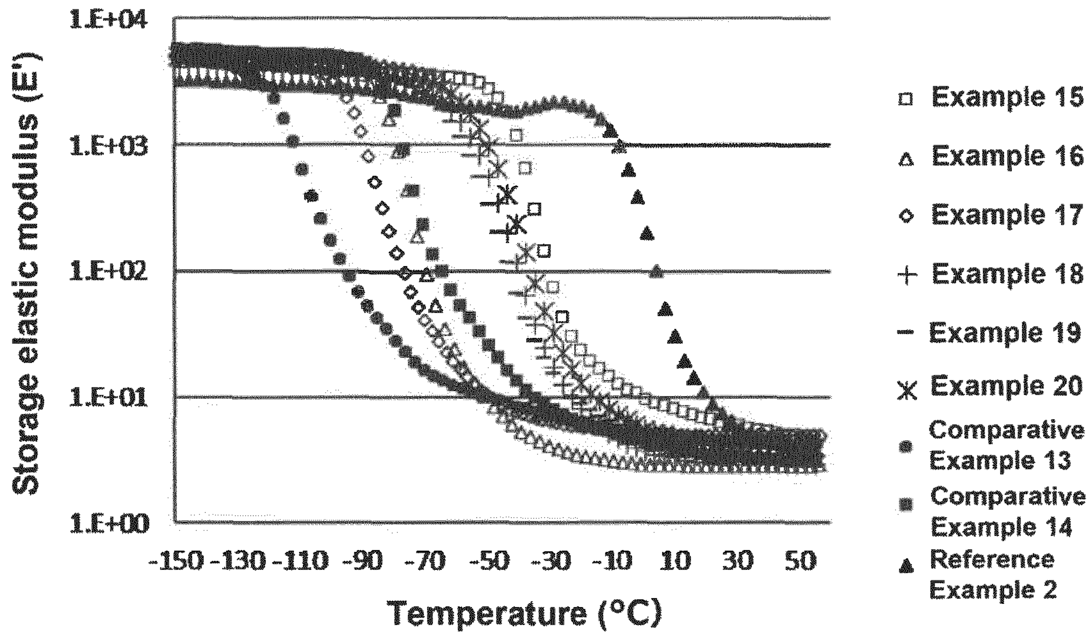
1.E+04
1.E+03
1.E+02
1.E+01
1.E+00
Storage elastic modulus (E')
-150 -130 -110 -90 -70 -50 -30 -10 10 30 50
Temperature (°C)
Example 15
Example 16
Example 17
Example 18
Example 19
Example 20
Comparative Example 13
Comparative Example 14
Reference Example 2

## INTERNATIONAL SEARCH REPORT

International application No.
**PCT/JP2021/039482**

**A. CLASSIFICATION OF SUBJECT MATTER**

***C08F 36/04***(2006.01)i; ***C08F 299/00***(2006.01)i; ***C08K 5/14***(2006.01)i; ***C08L 9/00***(2006.01)i; ***C08L 21/00***(2006.01)i; ***C08L 101/00***(2006.01)i; ***C09K 3/10***(2006.01)i; ***C08K 3/00***(2018.01)i; ***C08K 3/011***(2018.01)i; ***C08K 3/013***(2018.01)i; ***C08K 3/18***(2006.01)i
FI: C08L9/00; C08K3/00; C08K3/013; C08K5/14; C09K3/10 Z; C08L21/00; C08L101/00; C08K3/18; C08K3/011; C08F36/04; C08F299/00

According to International Patent Classification (IPC) or to both national classification and IPC

**B. FIELDS SEARCHED**

Minimum documentation searched (classification system followed by classification symbols)

C08F36/04; C08F299/00; C08K5/14; C08L9/00; C08L21/00; C08L101/00; C09K3/10; C08K3/00; C08K3/011; C08K3/013; C08K3/18

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/068141 A1 (KURARAY CO., LTD.) 06 May 2016 (2016-05-06) claims, paragraph [0032], examples 1, 2 | 1-11 |
| X | WO 2013/125496 A1 (KURARAY CO., LTD.) 29 August 2013 (2013-08-29) claims, production examples 1, 3, 4, 6-8, examples 1-32 | 1-4, 6-10 |
| X | JP 2008-523174 A (LANXESS INC.) 03 July 2008 (2008-07-03) claims, example 4 | 1-11 |
| X | JP 2009-263569 A (HITACHI CHEMICAL CO., LTD.) 12 November 2009 (2009-11-12) claims, examples 1-4 | 1-10 |
| X | JP 2015-193783 A (UBE INDUSTRIES, LTD.) 05 November 2015 (2015-11-05) claims, examples 1-7 | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 December 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/039482**

| Patent document cited in search report | Publication date (day/month/year) | Patent family member(s) | Publication date (day/month/year) |
|---|---|---|---|
| WO 2016/068141 A1 | 06 May 2016 | US 2017/0327681 A1<br>claims, paragraph [0078], examples 1, 2<br>EP 3214149 A1<br>KR 10-2017-0074867 A<br>CN 107109187 A | |
| WO 2013/125496 A1 | 29 August 2013 | US 2015/0051332 A1<br>claims, production examples 1, 3, 4, 6-8, examples 1-32<br>EP 2818507 A1<br>KR 10-2014-0129044 A<br>CN 106317520 A | |
| JP 2008-523174 A | 03 July 2008 | US 2008/0293852 A1<br>claims, example 4<br>EP 1824930 A1<br>KR 10-2007-0092960 A<br>CN 101072826 A | |
| JP 2009-263569 A | 12 November 2009 | US 2009/0266591 A1<br>claims, examples 1-4<br>CN 101570640 A<br>KR 10-2009-0113785 A | |
| JP 2015-193783 A | 05 November 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015105278 A
- WO 20019190620 A
- JP 2011132298 A